# EUROPEAN PATENT SPECIFICATION

(11) **EP 4 643 084 B1**
(45) Date of publication and mention of the grant of the patent: **02.12.2026**
(21) Application number: 23841093.0
(22) Date of filing: 27.12.2023
(51) Int. Cl.: G01B 9/02003, G01B 9/02015, G01B 9/02, G01P 3/36, G01S 17/34, G01S 17/58

(54) **SYSTEM AND METHOD FOR OPTICAL RANGE AND VELOCITY DETECTION**
SYSTEM UND VERFAHREN ZUR OPTISCHEN ENTFERNUNGS- UND GESCHWINDIGKEITSDETEKTION
SYSTÈME ET PROCÉDÉ DE DÉTECTION OPTIQUE DE DISTANCE ET DE VITESSE

(30) Priority: 27.12.2022 US 202263477293 P
(43) Date of publication of application: 05.11.2025
(73) Proprietor: Lidwave Ltd., 9777019 Jerusalem (IL)
(72) Inventor: HAI VIDAL, Yehuda, 9515003 Jerusalem (IL); WEISS, Uri, 9987800 Mevo Bietar (IL); KABESSA, Yossef, 7936700 Bnei Dekalim (IL); WENDE, David, 9079093 Mevaseret Zion (IL)
(74) Representative: Zacco GmbH
(86) International application number: PCT/IL2023/051325
(87) International publication number: WO 2024/142059

(56) References cited:
- US-A1- 2019 310 372
- US-A1- 2021 255 293
- US-B1- 11 372 105

## Description

### TECHNOLOGICAL FIELD

The present disclosure is in the field of optical detection and measurement systems and methods and relates specifically to systems and methods for optical detection of target distance and/or velocity.

### BACKGROUND

Range detection of objects plays a key role in various applications ranging from navigation, security, mapping, biomedical applications, and more. The ability to provide accurate and sensitive range data is of high demand for development of autonomous vehicles, and other automated systems. Various range detection techniques utilize electromagnetic radiation in different wavelength ranges and respective properties of the radiation.

There are various well known range detection techniques utilizing electromagnetic (EM) waves. For example, Radar and Lidar systems enable detection of range of a target by utilizing the propagation speed of EM radiation to determine distance of target objects by determining time of travel of EM signals. Additional techniques, such as optical coherence tomography (OCT) exploit interference properties of EM radiation and variations in length of optical path.

WO 2021/199,027 describes a system for range detection. The system comprises at least one beam source arrangement configured to provide illumination of certain coherence length, an optical arrangement, and a detection arrangement comprising at least one detector unit. The optical arrangement comprises optical elements forming at least first and second interferometer arrangements formed of a reference path and an interrogating path. The interrogating paths direct beam portions toward a target object and collect beam portions reflected therefrom. The reference path and interrogating path are combined to generate an interference signal on at least one detector of the detection arrangement generating detection data comprising at least first and second detected signals. Wherein, the first and second interferometer arrangements are configured with respective first and second different coherence factors, associated with at least one of (a) optical path of reference paths of the first and second interferometer arrangements, and (b) coherence length of beam passing in said first and second interferometer arrangements. A relation between said at least first and second detected signals is indicative of a distance to said target object.

WO 2023/053,111 describes optical system and respective method. The system comprising one or more coherent light, an optical arrangement, and a detection unit. The optical arrangement comprises optical elements forming at least first and second interferometer loops, each comprising a reference arm and an interrogating arm and are associated with at least first and second detectors of the detection unit. Light propagating in said interrogating arm is directed at a target object via an output optical element and a reflection of light from said target object is collected by an input optical element. The detection unit is configured to determine data indicative of a relation between signals detected by the at least first and second detectors. One of said first and second interferometer loops comprises a first noise generator positioned to affect light propagating in both of the corresponding reference and interrogating arms, thereby affecting coherence of light in said interferometer loops.

US 11,372,105 describes a system including one or more waveguides to receive a first returned reflection having a first lag angle and generate a first waveguide signal, receive a second returned reflection having a second lag angle different from the first lag angle, and generate a second waveguide signal. The system includes one or more photodetectors to generate a first output signal within a first frequency range, and generate, based on the second waveguide signal and a second LO signal, a second output signal within a second frequency range. The system includes an optical frequency shifter (OFS) to shift a frequency of the second LO signal to cause the second output signal to shift from within the second frequency range to within the first frequency range to generate a shifted signal. The system includes a processor to receive the shifted signal to produce one or more points in a point set.

US 2021/0255,293 Techniques are disclosed for systems and methods to provide accurate and reliable target information when there is relative motion between a remote sensing system and the target. A remote sensing system includes a multichannel ranging sensor assembly and a controller. The ranging sensor assembly includes multiple sensor channels configured to emit modulated sensor beams towards a target and to detect corresponding reflected beams reflected from the target, where the modulated sensor beams are selected to be correlated to each other and mutually incoherent with respect to each other. The controller is configured to receive reflected beam sensor signals corresponding to the detected reflected beams, to determine Doppler components associated with the reflected beams based, at least in part, on the first and second reflected beam sensor signals, and to generate target information based, at least in part, on the determined Doppler components.

US 2019/0310,372 Techniques for Doppler correction of chirped optical range detection include obtaining a first set of ranges based on corresponding frequency differences between a return optical signal and a first chirped transmitted optical signal with an up chirp that increases frequency with time. A second set of ranges is obtained based on corresponding frequency differences between a return optical signal and a second chirped transmitted optical signal with a down chirp. A matrix of values for a cost function is determined, one value for each pair of ranges that includes one in the first set and one in the second set. A matched pair of one range in the first set and a corresponding one range in the second set is determined based on the matrix. A Doppler effect on range is determined based on combining the matched pair of ranges. A device is operated based on the Doppler effect.

### GENERAL DESCRIPTION

Various techniques enable detection of range or velocity of one or more target objects. However, combined simultaneous detection of range and velocity may provide enhanced data on the surrounding. This may be used for example in various safety modules for vehicles, or other applications.

The present disclosure provides an optical system utilizing coherent illumination having selected frequency modulation comprising at least first and second different modulations, for combined detection of range and velocity of one or more objects. In this connection, the first and second different modulations may relate to first and second periods having respective first and second different modulations of illumination, simultaneous illumination using two or more sources providing respective first and second different modulations, operation of one source providing an illumination beam associated with a beam splitter and two or more modulators providing the at least first and second different modulations, or other configurations as the case may be.

Interferometric/coherent systems are commonly used for measuring frequencies at different wavelength ranges (e.g., optical or radio frequency). The measured frequency may represent some physical entity in the real world, depending on the application (e.g., range, vibration, velocity, etc.).

There are number of methods to utilize optical interference for range and/or velocity measurements. Some known techniques such as FMCW and FCR (also known as CTC) are based on interferometric measurement, where a light source is split into two portions; first portion is called the signal or interrogating beam, and the second portion is called the reference beam or local oscillator (LO). Such methods are generally described in WO 2021/199,027 and WO 2023/053,111, assigned to the assignee of the present application and incorporated herein by reference. The interrogating beam is used to illuminate a target, and part of the back reflection of the beam is collected by the system. The back reflection is then mixed/ interfered with the local oscillator, and the interference is analyzed, usually in the frequency domain using a Fourier Transform, and from the analysis the range and/or velocity is determined/calculated.

Typically, to provide accurate data using these methods and systems, detection of two separate signals is needed, e.g., using two detectors or one detector with time division. The two separate signals are generally used to provide sufficient sampled data for determining distance to the object and object velocity.

The present disclosure provides systems and methods configured for determining range and velocity (or at least two types of frequency shifts) of one or more target objects in a field of view. As described in more detail further below, the present technique may be used for scanning a selected field of view and/or collect data from the field of view to map range and velocity of objects in the field of view. The technique of the present disclosure utilizes Frequency Modulated Continuous Wave (FMCW) detection techniques, while using an additional signal or reference beam, shifted in frequency with respect to a first beam. This enables detection of two or more frequency shifts associated with two or more separate parameters of the one or more target objects.

The system configuration of the present disclosure can utilize relatively low-cost hardware and electronics. Further, the technique may utilize separate first and second modulation period and a common detection unit, or separate simultaneous first and second different modulations at the detection path to provide range and velocity data of one or more target objects. This simplifies the routing and construction of the optical system as well as sampling of the signal and allows for reducing a number of calculations needed for determining target object data such as range and velocity, or other two frequency shifts. Thus, the present disclosure enables significant decrease in costs associated with manufacturing and the use of such range and velocity measurement systems.

According to a first broad aspect, the present disclosure provides an optical system according to claim 1. Additional advantageous features of the system are described in the dependent claims.

According to a second broad aspect, the present disclosure provides a method according to claim 12. Additional advantageous features of the method are described in the dependent claims.

### BRIEF DESCRIPTION OF THE DRAWINGS

In order to better understand the subject matter that is disclosed herein and to exemplify how it may be carried out in practice, embodiments will now be described, by way of non-limiting example only, with reference to the accompanying drawings, in which:
**Fig. 1** illustrates a conventional optical coupler for interfering/ mixing of two signals;
**Figs. 2a-2d** illustrate a conventional optical interference system for determining optical frequency shift, usually correlated with the range or velocity of a target;
**Figs. 3a-3e** illustrate a further conventional optical interference system for determining optical frequency shift, usually correlated with the range or velocity of a target;
**Fig. 4** illustrates an optical system according to some embodiments of the present disclosure;
**Fig. 5** illustrates modulated reference and signal beams having first and second frequency modulation periods according to some embodiments of the present disclosure;
**Figs. 6A to 6F** exemplify various frequency shifts that can be experienced by signal beam, according to some embodiments of the present disclosure;
**Figs. 7A to 7D** exemplify frequency shift direction and magnitude as determined by the system of **Fig. 4** according to some embodiments of the present disclosure; and
**Fig. 8** is a block diagram exemplifying a method for detecting range and velocity of one or more target objects according to some embodiments of the present disclosure;
**Fig. 9** illustrates an additional configuration of an optical system utilizing two signal beams shifted by frequency between them according to some embodiments of the present disclosure;
**Fig. 10** exemplifies an optical system utilizing a scanner according to some embodiments of the present disclosure;
**Fig. 11** exemplifies an optical system according to some embodiments of the present disclosure configured to generate a plurality of interrogating beams for detecting parameters within a plurality of locations; and
**Fig. 12** exemplifies a region scan configuration for scanning a field of view according to some embodiments of the present disclosure.

### DETAILED DESCRIPTION OF EMBODIMENTS

In various situations, there is value in determining more than a single parameter of a target object. For example, in various sensing applications such as in vehicle related sensing, identifying data on range and relative closing velocity of an object may be of high importance. The present technique utilizes frequency modulated emission from a generally coherent light source, and an arrangement of two or more reference beams (or two or more signal beams) interfering with at least one signal beam (or at least one reference beam) to determine data indicative of frequency shift in signal beam(s) reflected from one or more target objects and associated with two different sources of such frequency shift, such as distance and velocity.

Modulation of the emitted signal may form a generally periodic pattern that comprises a first and a second modulation periods, e.g., chirp up and chirp down sections, effectively providing two measurements of frequency variations of the collected signal. In some embodiments, the present technique may utilize simultaneous first and second different modulations, e.g., using first and second differently modulated light sources. The at least first and second different modulations provides respective first and second different measurements that can provide data indicative of both range/distance to the object and additional frequency shift (e.g., Doppler shift associated with closing velocity) caused by signal beam interaction with the target object. In this connection the term chirp relates to a signal having frequency variation through signal duration. A chirped-up signal is a signal whose frequency goes up with time and a chirped-down signal is a signal whose frequency goes down with time.

To this end the technique of the present disclosure, may in some embodiments utilize the concept of Frequency Modulated Continuous Wave (FMCW) detection techniques, while using an additional, frequency shifted, reference (or signal) arm. More specifically, in some embodiments, the present technique utilizes an optical system comprising a light source unit configured to generate a frequency modulated emission having at least first and second frequency modulations having different modulations (chirp), and an optical arrangement. The first and second frequency modulations (at times referred to as first and second modulations) may be time separated providing first and second modulation periods, or simultaneous, associated with first and second modulated light sources. For simplicity the present disclosure relates to first and second modulations periods. However, it should be understood that similar effect may be obtained using first and second differently modulated light sources operating simultaneously.

The optical arrangement is configured to split optical emission to at least one signal beam directed at a target object, and at least two reference beams, and to collect light reflected from the target object, generating a collected beam. The optical arrangement is further configured to interfere the collected beam and the at least two reference beams and direct the interfered signal onto a detection unit operating at a selected sampling bandwidth (sampling rate). The optical arrangement comprises at least one frequency shifter located in path of at least one of the reference beams or of at least one of the signal beams. The at least one frequency shifter is operable to cause a selected, predetermined, frequency shift to at least one of the reference or signal beams. Generally, the frequency shifter operates to generate a frequency difference ω⁺ between the at least two reference beams, or at least two signal beams, enabling to determine direction of frequency shift caused by the at least one target object. The detection unit operates at a selected sampling rate for collecting interfering beam intensity variation within a predetermine frequency range. Accordingly, the detection unit provides output data indicating of beating frequencies of the collected signal, comprising at least a first beating frequency indicative of frequency shift of the collected signal, and a second beating frequency shifted from the frequency shift of the collected signal by frequency shift ω⁺, indicating direction of frequency shift of the collected signal. In some examples, using first and second modulation periods, the detection unit is configured to determine frequency shift of the collected signal during the first frequency modulation (e.g., chirp) period, and during the second frequency modulation (chirp) period to enable detection of both distance and closing velocity of the target object. In some other examples using simultaneous first and second frequency modulations, the signal of the at least first and second different modulations may be identified respectively in accordance with variation in one or more of: beam wavelength, predetermined frequency shift *ω*⁺ (e.g., being different between the different modulations), amplitude variation within the peak pattern, as well as in accordance with the modulation pattern itself. To this end the detector unit may utilize one or more dichroic filter or beam splitter or polarizing beam splitter. Alternatively, or additionally, the signal of the first and second different modulations may be separated using a signal processing circuit (e.g., associated with a control unit) operating in frequency domain and separating the signal of the first and second different modulations based on different peak patterns thereof. The peak patterns may vary in frequency shift *ω*⁺, amplitude ratio, and/or by the use of an additional reference or signal beam having an additional selected frequency shift.

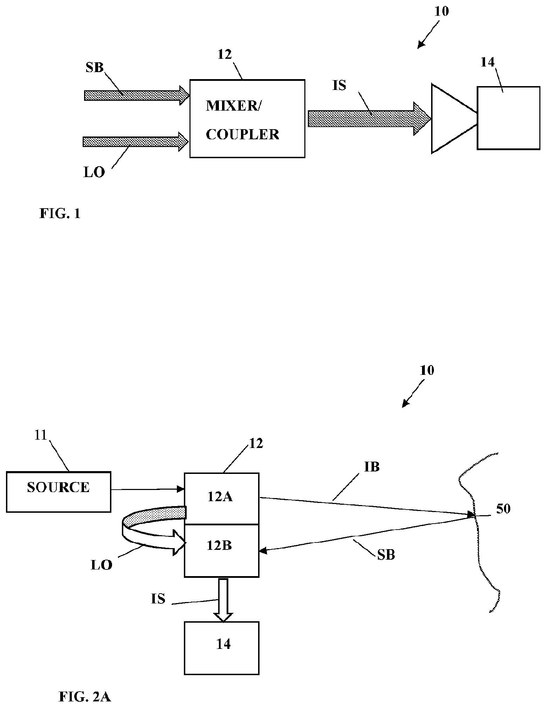

Reference is made to **Fig. 1** schematically illustrating an optical interferometric/mixing system **10** for determining an optical frequency shift, usually correlated with the range or velocity of a target object. In this example, an input signal beam **SB** is collected and combined in a coupler **12** with a reference beam (Local Oscillator) **LO**, generating an interference signal **IS.** The interference signal is collected and detected by a detector **14.** Typically, the local oscillator LO beam has a selected frequency *ω*₀, and the signal beam **SB** has a frequency *ωₛ*. The signal frequency *ωₛ* generally represents certain one or more measured frequency shifts being shifted from the selected frequency such that *ωₛ* = *ω*₀ + Ω, where Ω being a frequency shift to be determined. Generally, the detector **14** may be characterized as having sampling bandwidth that includes the interference frequency |*ω*₀ - *ω*ₛ|. This may be implemented based on sampling rate and response time of the detector **14.**

The signal beam **SB** and the reference **LO** beam are combined to form interference signal **IS** between them in the system, and their interfered signal is sampled by a photodetector **14,** operable with a selected sampling bandwidth. The optical frequencies *ωₛ* and *ω*₀ may generally be too high to be sampled directly by the photodetector **14,** which generally samples average intensity within a selected sampling rate. Thus, typical optical frequencies are beyond the detector's bandwidth. However, the mixing of the two optical signals produces a beating signal at the frequency of the difference between them |*ω*₀ - *ωₛ*|, and this beating signal may be within the bandwidth of the detector **14.** The electrical signal that is produced by the detector can be given by: $I \left(t\right) = {I}_{LO} + {I}_{s} + 2 \sqrt{{I}_{LO} {I}_{s}} ⋅ cos \left(\left[{ω}_{0}-{ω}_{s}\right]t+ϕ\left(t\right)\right)$ (equation 1)

Where I_{LO} and I_{S} are the intensities of the local oscillator beam **LO** and the signal beam **BS** respectively, and as indicated above *ω*₀ and *ωₛ* are the frequencies of the reference **LO** and the signal **SB** beams respectively, *t* is time, and *ϕ*(*t*) is the relative phase difference between the reference beam **LO** and the signal beam **SB,** at specific time *t.* As known, the cosine function in equation 1 is symmetric so that *cos(+x) = cos(-x).* This results in detection of absolute value of the difference between the signal frequency and the LO frequency. More specifically, the cosine function relates to absolute value of |*ω*₀ - *ωₛ*|, no matter which one of the frequencies *ωₛ* or *ω*₀ is larger. It should be noted that describing the electrical signal produced by the detector using complex number representation, and/or using Sine function while using measurable quantities provides similar results.

Generally, equation 1 illustrates various cases, in which a signal beam undergoes a frequency shift indicating one or more measurable parameters of the object. However, the detection scheme provides data on absolute value of the frequency shift, that does not include data on direction of the shift. For example, in the case of only doppler shift due to velocity, the absolute values data cannot distinguish between positive and negative closing velocity of the object. Additionally, when two frequency shifts are present, due to the distance to target object, and its relative closing velocity, two modulations with ambiguity of the frequency shift sign may cause ambiguities and errors in the calculations of the target's distance and velocity.

Further, **Figs. 2A** to **2D** exemplify an interferometric system (**Fig. 2A**) and exemplary data collected by the system and indicative of detected frequency shift associated with one or more of distance and velocity of an object **50** obtained by the system.

**Fig. 2A** exemplifies an optical system utilizing the basic operation concept of the example of **Fig. 1****.** As shown, the system **10** utilizes a radiation (light) source **11** emitting coherent beam and a radiation splitting/combining arrangement **12** receiving the coherent beam and generating an interrogating beam **IB** and reference beam **LO** (also referred to at times as local oscillator). Radiation splitting/combining arrangement **12** may include a first splitter **12A** and a second combiner **12B.** The interrogating beam is directed toward one or more target objects **50** and a reflected beam portion **SB** (signal beam) returning from the target object **50** is collected by the system. The collected reflected beam **SB** is combined with the reference beam LO by beam combiner **12B** generating an interference signal **IS,** which is collected by a detector unit **14** at a selected sampling rate providing selected detection bandwidth.

In this example, radiation source **11** may be a laser source emitting a light beam at a frequency *ω*₀. The beam is split into two arms: the reference arm **LO** remains at the source frequency *ω*₀, and the signal arm **IB** is transmitted towards one or more target objects **50,** hits the target **50,** and a portion of the scattered/reflected light **SB** is collected by the optical system **10** to extract information regarding the measured target **50** (e.g., its distance, reflectivity, velocity). The collected signal beam **SB** and the reference beam **LO** are then mixed (interfere) in the beam combiner **12B,** and their interfered signal **IS** is collected by a photo detector **14.**

Generally, the signal beam **SB** may undergo some frequency shift Ω while travelling to the target **50** and back into the system **10.** This frequency shift may be due to the time it takes for the beam to get to the target and back (e.g., when using range measurement at frequency modulated (FM) systems), a doppler shift due to closing velocity of a moving target, or any other phenomenon that causes a frequency shift that can be measured. As mentioned above, the optical frequencies *ωₛ* = *ω*₀ + Ω, and *ω*₀ are typically beyond the bandwidth of the photodetector **14,** which can typically only determine average intensity within typical sampling time. However, the beating signal |*ω*₀ - *ωₛ*| that is produced by mixing the two light beams **LO** and **SB** may be within sampling bandwidth of the photodetector **14,** causing the photodetector to generate a varying output electrical signal at the beating frequency |*ω*₀ - *ωₛ*|*.*

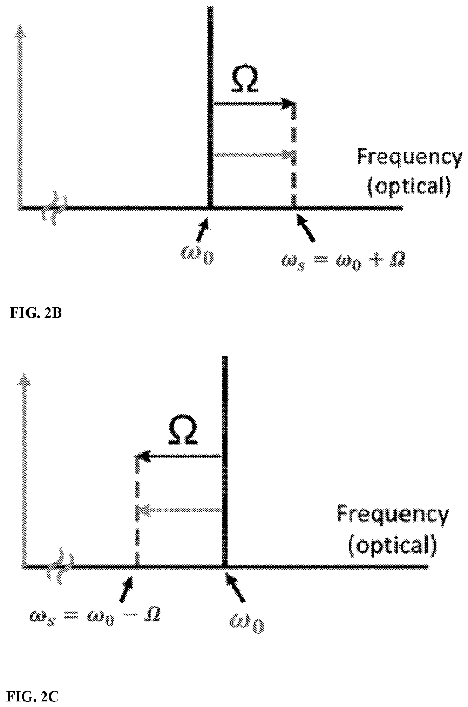

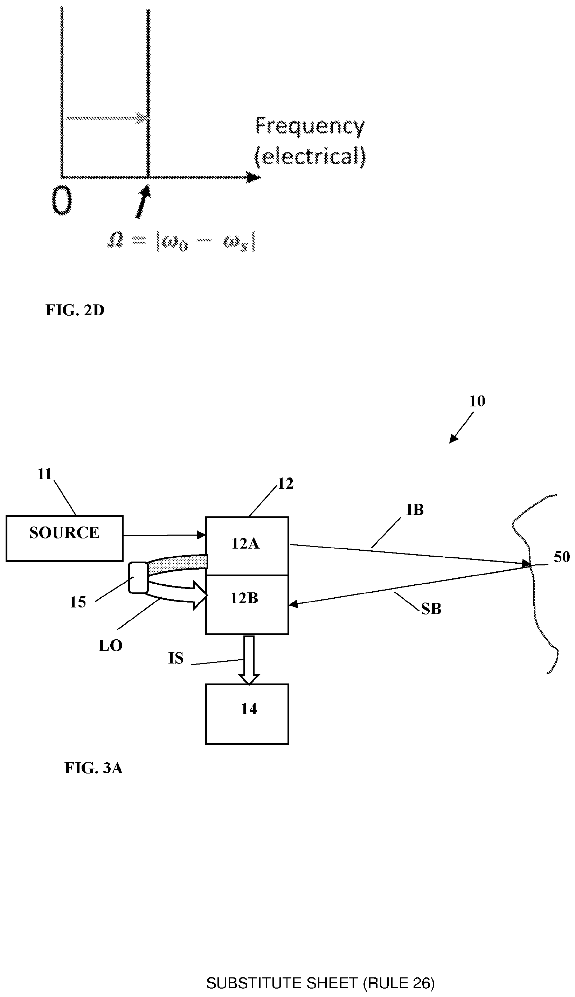

**Figs. 2B and 2C** exemplify the optical frequencies of interference signal **IS** collected by the detector **14** for the cases of positive frequency shift Ω and negative frequency shift Ω respectively. **Fig. 2D** illustrates resulting electrical signal of the beating frequency Ω, which is similar regardless of sign/direction of the frequency shift. The electrical signal that is produced by the photodetector can be processed using a Fourier Transform (FT) to present this electrical beating signal at the frequency domain instead of at the time domain and providing output data on the one or more target objects **50.**

Accordingly, a main limitation of the interferometric measurement system **10** illustrated in **Fig. 2A** relates to the system ability to detect the value of the frequency difference Ω, while being insensitive to direction (positive or negative) of this frequency shift. As mentioned above, this is because the frequency of the measured electrical signal is the absolute value of the difference between the **LO** and the signal beams: |*ω*₀ - *ωₛ*| = |Ω|, no matter which one of the frequencies *ωₛ* and *ω*₀ is larger. Thus, in both cases of a positive frequency shift *ωₛ* = *ω*₀ + *Ω*, as exemplified in Fig. **2B****,** or a negative frequency shift *ωₛ* = *ω*₀ - *Ω*, as exemplified in **Fig. 2C****,** the detected spectrum of the output electrical signal is similar as illustrated in **Fig. 2D****.** This limitation results in an ambiguity in direction of the frequency shift, e.g., direction of movement of the target object **50** or its location or both.

This lack of information in the direction of the frequency shift may be very significant in many applications. For example, assuming the measured frequency shift is associated with doppler shift of a moving target, it is generally very important to know if the target is moving towards the detection system (positive frequency shift) or away from the detection system (negative frequency shift) at a given velocity. However, the basic interferometric measurement systems cannot distinguish between these two scenarios as demonstrated in **Figs. 2A-2D****.**

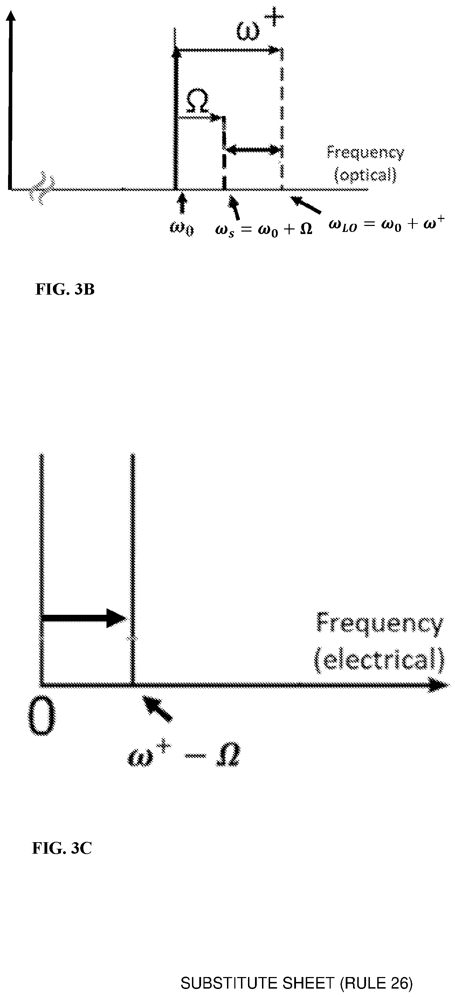

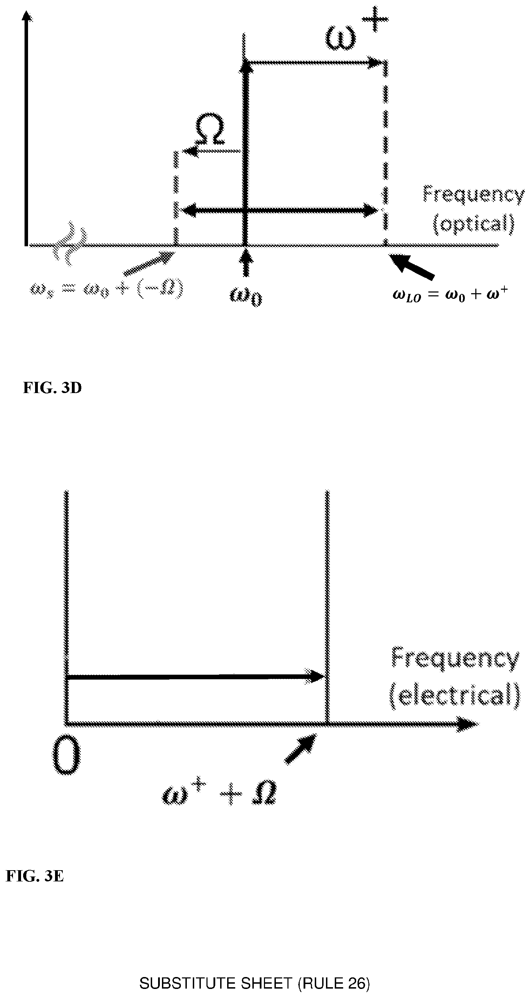

One possible solution for the problem of the ambiguity of positive and negative frequency shifts is to add a known frequency shift to the reference arm relative to the signal arm. This is schematically illustrated in **Figs. 3A-3E****.** **Fig. 3A** illustrates an optical inspection system similar to that of **Fig. 2A****,** other than an addition of frequency modulator **15** positioned and configured to apply frequency modulation/shift *ω*⁺ to reference beam **LO.** **Figs. 3B** **and** **3D** illustrate the frequencies of the reference and signal beams in optical frequency domain for positive and negative shift Ω respectively. More specifically, in this configuration the laser source emits light at a frequency ω₀ and the reference arm **LO** frequency is shifted either up or down by a selected factor of *ω*⁺. The signal beam **SB** undergoes a frequency shift Ω in the measurement process. Accordingly, the signal beam **SB** that is collected by the system is at a frequency *ωₛ* = *ω*₀ *+ Ω*, and the reference beam **LO** in the system is at a frequency *ω_{LO}* = *ω*₀ + *ω⁺.* As shown in **Figs. 3C** **and** **3E****,** the collected signal beam interferes in the system with the LO beam yielding an interference pattern at a beating frequency of: $\left|{ω}_{LO}-{ω}_{s}\right| = \left|\left({ω}_{0}+{ω}^{+}\right)-\left({ω}_{0}+Ω\right)\right| = \left|{ω}^{+}-Ω\right|$ (equation 2) enabling to distinguish between positive and negative frequency shift Ω.

This detection scheme is efficient as long as *ω*⁺ ≥ |Ω|, i.e., the frequency shift that is added to the LO beam is higher than the range of values of the frequency shift of the signal that can be detected. In these conditions, the system distinguishes between a positive frequency shift of (+*Ω*) and a negative frequency shift of (-*Ω*) in accordance with the detected beating frequency as schematically illustrated in **Figs. 3B-3E****.**

This technique has several disadvantages. For example, if the value of the measured frequency |Ω| is higher than the frequency shift *ω*⁺ added to the reference arm **LO,** i.e., |Ω| > *ω*⁺, there is an ambiguity not only in the direction of the shift in measured frequency but also in its value. Further, this situation may occur in cases where the frequency shift *ω*⁺ is comparable to the range of the measured frequency |Ω|.

Additionally, the detection bandwidth is required to be higher than *ω*⁺ + *Ω*, demanding high speed (and generally expensive) detectors. Also, reflections from any optical element in the system may generate strong noise at frequency *ω*⁺ masking the signal to be detected, especially for low frequency shifts |Ω|. These problems require isolation techniques to reduce the effect of the reflections on the performance of the system. Additionally, modulators with high enough bandwidth are usually bulky and expensive, and integrating such modulators into a system may be complex and expensive.

To solve the above deficiencies, the present disclosure provides a system and corresponding method enabling detection of frequency shift to an interrogating beam, including identifying direction of the frequency shift. The underlying principle of the solution of the present disclosure relates to the use of two or more mixed beating signals instead of one. The two or more mixed beating signals may include beating signal associated with frequency shift *Ω* to be detected, and at least a second beating signal slightly shifted to either *Ω* + *ω*⁺ or *Ω* - *ω⁺.* The two or more beating signals may have pre-defined relations of the frequency and the relative magnitude between them providing a predetermined peak pattern of beating signals in frequency domain, indicating the frequency shift *Ω* to be detected including direction thereof. More specifically, the frequency difference between the beating signals is *ω*⁺, and the direction of the frequency shift *Ω* can be determined based on relative position of beating signals. For example, one beating signal may be adjusted with amplitude higher than the other signal, such that a location of the high amplitude signal with respect to the low amplitude signal indicated direction of the frequency shift *Ω*.

In this connection, determining direction of a frequency shift may be sufficient to determine object distance or relative velocity caused by signal beam interaction with the object. However, the signal returned/reflected from the target object may experience two different frequency shifts simultaneously. In a typical example, such two frequency shifts may be associated with frequency shift associated with a distance to the target object and a Doppler shift generated due to closing speed of the target object toward or away from the optical system. Such two frequency shifts may have similar or opposite directions, leading to total addition or subtraction of frequency shifts of different sources.

The present disclosure provides an optical system capable of identifying two different frequency shifts in signal beam reflected from one or more target objects and identifying magnitude of the shifts as well as direction thereof. Identifying such two different frequency shifts enables the system and technique of the present disclosure to accurately determine a distance of the object and the closing velocity thereof, including direction of the closing velocity. As described further below, the technique of the present disclosure utilizes optical frequency range (e.g., visible or IR spectrum) provides increased sensitivity to Doppler shifts, over the use of millimetric wavelengths such as in RF and microwave radar systems.

To this end, the present disclosure utilizes frequency modulation of light emission having at least first and second frequency modulation periods having different modulation of the emitted frequency. Generally, the frequency modulation may be associated with chirp of the emitted illumination being chirp up at selected rates, chirp down at selected rates and/or no chirp. For example, frequency modulation of light emission may include first chirp section and second chirp section having different first and second chirp rates being positive, negative or zero. As an illustrative example, the present disclosure refers to the first and second different modulations as being temporally separated, providing first and second modulation periods. Further, for additional simplicity, the first and second different modulations are exemplified by two chirp periods with the same chirp rate, first chirp up section and second chirp down section for simplicity. It should however be understood that various combinations of first and second different modulations may be used, including e.g., non-linear chirp modulations, two chirp modulations having different chirp rates, being chirp up and/or chirp down, and/or a first chirp modulation and a second zero-chirp (un)modulation.

Additionally, the present technique utilizes two or more mixed beating signals including beating signal associated with frequency shift *Ω* to be detected, and at least a second beating signal slightly shifted to *Ω* ± *ω⁺.* This is provided using two or more reference beams (or two or more signal beams), shifted between them by predetermined frequency ω⁺, and having predetermined amplitude (power) ratio between them. This configuration generates two beating frequencies detectable by the detection unit, where a first beating frequency relates to the frequency shift *Ω* to be detected, and a second beating frequency is slightly shifted at *Ω* ± *ω*⁺ indicating sign (direction) of the frequency shift *Ω* to be detected. Alternatively, as described in more detail below, each of the two or more reference (or signal) beams may be shifted by a selected portion of the predetermined frequency shift *ω*⁺, generating a frequency difference *ω*⁺. For example, the two or more reference (or signal) beams may be shifted by $\frac{+ {ω}^{+}}{2}$ and $\frac{- {ω}^{+}}{2}$, or any other selected predetermined shifts. Accordingly, the collected signals of the interference beam may generate a predetermined peak pattern in frequency domain, having a selected predetermined and known relation to the frequency shift *Ω* to be detected.

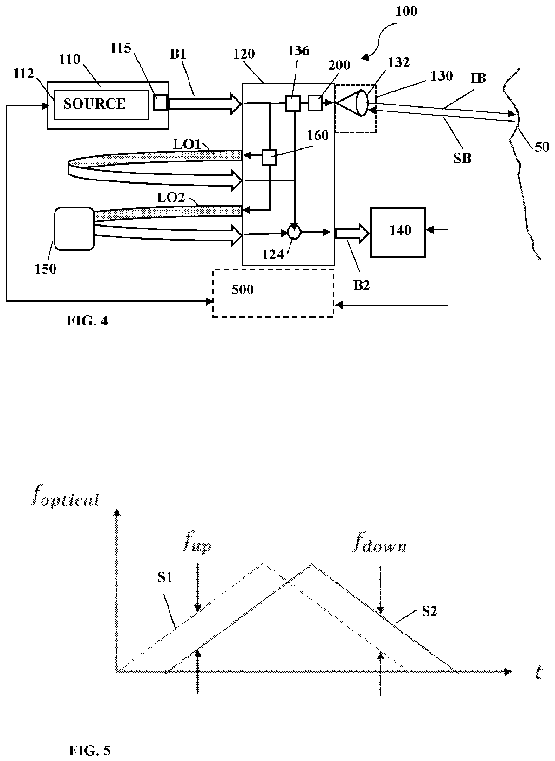

In this connection, reference is made to **Fig. 4****,** schematically illustrating an optical system **100** according to some embodiments of the present disclosure. The system includes a light source unit **110** including a light source **112** (e.g., laser unit) and a frequency modifier **115.** The light source unit is configured to emit generally coherent electromagnetic radiation beam **B1** while applying selected frequency modulation pattern having at least one first modulation section (e.g., chirp up) and at least one second modulation section (e.g., chirp down).

The system further includes an optical arrangement **120** configured to receive the emitted beam **B1** and form at least three beam components including one or more interrogating beam **IB** propagating along a signal arm, and two or more reference beams propagating along reference arms and forming two or more local oscillators **LO1** and **LO2.** The one or more interrogating beams **IB** may be transmitted toward one or more target objects **50** using a transmission/collection arrangement **130** configured to transmit the interrogating beam **IB** toward the object **50** and collect a signal beam **SB** reflected from the object **50.** Transmission/collection arrangement **130** is exemplified in **Fig. 4** using common transmission/collection optics **132** and circulator/beam splitter/polarizing beam splitter **136.** In some examples, transmission/collection arrangement may include separate transmission optics and collection optics. In some examples, transmission/collection optics **132** may include a quarter wave plate located upstream or downstream of transmission/collection optics **132.** The quarter waveplate may provide polarization rotation of light between output beam and input beam, and thus utilizing the effect of a polarization beam splitter for directing input beam **SB** to be interfered with reference beams **LO1** and **LO2.** In case of separate transmission optics **132** and collection optics **134** when used, each of the transmission and collection optics may include a quarter waveplate, or a common quarter waveplate may be used.

Typically, the optical system **100** may also utilize one or more optical amplifiers **200** positioned to receive and amplify interrogating beam, prior to transmission/collection arrangement **130.** Optical amplifier **200** may be formed by a gain medium, either fiber amplifier or semiconductor optical amplifier, and configured to amplify intensity of the interrogating beam to increase range and signal intensity of the system. The example of optical amplifier **200** is illustrated in **Fig. 4****,** however, it should be understood that the optical amplifier may be utilized with any configuration of the optical system as described herein including the configurations exemplified herein below. Additionally, in some examples, the optical arrangement may include one or more optical amplifiers located in path of the reference beams **LO1** and/or **LO2.**

The optical arrangement **120** is further configured for directing components of the beam **B1** toward at least first and second reference arms **LO1** and **LO2.** The optical arrangement may also include a beam combiner **124** configured to receive the collected signal beam **SB** and reference beams of the first and second reference arms **LO1** and **LO2** and to combine the received beams to a combined interference beam **B2.** The optical arrangement **120,** and/or the beam combiner **124** may be further configured to direct the interference beam **B2** to be detected by a detection unit **140** including at least one detector (e.g., photodiode, CCD etc.).

The detection unit **140** includes at least one detector operable in a selected sampling rate to provide a selected detection bandwidth as described in more details further below. Detection unit **140** may be a single detector, or two detectors coupled together to construct a balanced detector. The detection unit provides output data indicative of one or more, and typically two or more beating frequencies of the interference beam **B2.** The output data on the beating frequencies may provide data on a frequency shift applied to the interrogating beam **IB** due to interaction with the target object **50,** including direction of the frequency shift. The detected frequency shift may be further interpreted to determine one or more parameters of the target object **50,** including for example, distance, closing velocity due to doppler shift, etc. Generally, the one or more detectors of detection unit **140** is operable at a selected sampling rate, providing output data in the form of a sequence of intensity levels detected over time. Such sequence output data can be processed, e.g., using Fourier transformation, to indicate one or more frequencies of variation in detected intensity. The frequency bandwidth and resolution for detection is determined in accordance with sampling rate, response time and duration of sampling of the detector.

According to some embodiments of the present disclosure, system **100** also include at least one modulator unit **150** positioned in path of at least one of the reference beams **LO1** or **LO2.** Modulator **150** is configured to apply a selected frequency and/or amplitude shift to the respective beam to provide different modulation between the first and second reference beams. In some further embodiments, as described further below, the modulator **150** may be positioned in path of one of two different interrogating beams. To distinguish between the first and second reference beams, optical arrangement **120** may include a beam splitter or attenuator **160** configured to vary amplitude of the first **LO1** and second **LO2** reference beams to provide different amplitude of the beams, having a selected predetermined level, being a selected difference or a selected ratio. Generally, the modulator **150** may be a frequency modulator, phase modulator, IQ modulator, or other modulator types. The modulator **150** may also be an acuosto-optical or electro-optical modulator phase modulator, mechanical phase modulator, nonlinear crystal, and/or FM-based modulator. In some embodiments, utilizing certain frequency modulation of the output emitted beam, the modulator **150** may also be a delay line as exemplified further below. Further, in some embodiments, the optical arrangement may utilize two modulators, each configured to shift frequency of one of the two or more reference (or signal) beams to generate a selected frequency difference *ω*⁺ between them.

System **100** may also include a control unit **500** configured to operating the system and its at least one radiation source **110,** and for receiving detection data from the detection unit **140.** Control unit may operate to analyze the detection data as described herein below and determine output data indicative of a frequency shift applied by the object **50.** The control unit **500** may further operate to determine one or more parameters of the object **50** such as velocity, location, distance, etc. To this end control unit may include one or more processors and memory circuitries, operable to execute selected computer readable code stored on a selected storage unit.

Generally, the system **100** of the present disclosure may be implemented by an optical arrangement **120** forming at least first and second interferometer loops. In the example of **Fig. 4****,** this can be described as a first interferometer loop formed by target beam **IB** and **SB** interfering with first reference beam **LO1,** and separately interfering with second reference beam **LO2.** Each of the at least first and second interferometer loops include a reference arm and a signal (interrogating) arm. Combined beam including reference and signal beams of the at least first and second interferometer loops is directed at a detection unit **140** to be detected at a selected sampling rate/frequency. According to the present disclosure, at least one of the at least first and second interferometer loops include a frequency shifter **150** along one of its reference or signal arms, causing a selected frequency shift to light passing therethrough.

Alternatively, as described in connection to **Fig. 4****,** the system of the present disclosure is formed of an optical arrangement **120** splitting an input beam **B1** into at least three beam portions, including at least one reference beam and at least one signal beam, e.g., two reference beams **LO1** and **LO2**, and one signal beam **IB** or two signal beams and one reference beam. At least one of the beam paths (e.g., one of two reference beams or one of two signal beams) includes a frequency shifter **150** shifting frequency of the beam portion by a selected shift.

Additionally, according to some embodiments, at least one of the beams (e.g., one of two reference beams **LO1** and **LO2,** or one of two signal beams) has a higher amplitude than the other, and their amplitude ratio is determined to a fix ratio, either by using an uneven beam splitter (e.g., 25:75, 40:60, beam splitter or any other selected splitting ratio) or an optical attenuator **160.** The optical arrangement **120** further combines the at least three beams onto a detector unit **140** to generate interference signal **B2.** The detector unit **140** may include one or more detectors.

Furthermore, the present technique can be realized either by two reference arms and one or more signal arms, or by using two signal arms and one or more reference arms, i.e., transmitting two signal beams differing in their amplitude and frequency and mixing the collected beam with one reference beam. Without loss of generality, the system of the present disclosure is demonstrated herein using a scheme of two LO (reference) arms. Implementation using two signal arms can be understood with some modifications.

According to some embodiments of the present disclosure, the present technique may utilize a fixed frequency difference between the at least two reference beams **LO1** and **LO2** (or between at least two interrogating/signal beams as exemplified further below) propagating along the respective reference arms. For example, one of the two reference beams in the system **100** may remain at the original frequency of the radiation source (e.g., laser source at IR, visible or other wavelength range), and the other reference beam undergoes a selected frequency shift *ω*⁺ by modulator **150.** In some other embodiments, a first reference arm may be modulated to apply a frequency shift by a selected frequency shift (e.g., -*ω** /2) down, and a second reference may be modulated to apply a frequency shift by a selected frequency shift (e.g., +*ω*⁺/2) up. Each of the reference beams **LO1** and **LO2** are further directed to interfere with the collected signal **SB** arm to generate combined beam having two or more mixed signals output collected by the detector unit **140.** The Interference signal **B2** includes two mixed signals, separated in frequency by a shift of *ω*⁺, which is typically selected to be within detection bandwidth of the detector unit **140.** To associate each of the mixed signals to the respective first or second reference arms, the amplitude of the first and second reference arms may be adjusted to reduce one or more reference arms by a selected known factor. This provides a selected known ratio between the amplitudes of the mixed signals, that are separated by a known frequency shift *ω*⁺. The amplitude ratio may be determined according to selected considerations in the system design. Using that scheme, the value of the measured frequency is obtained by the beating frequency of the interference pattern of the signal beam with one of the reference beams, and direction of the frequency shift to be detected is determined by relative location of a second beating frequency associated with interference between the signal beam **SB** and the second reference beam, indicating positive or negative frequency shift as explained and demonstrated below.

Additionally, frequency modulator **115** of the light source unit **110** may also be applied by any suitable frequency modulator capable of providing periodic modulation such as acousto-optical modulator, electro-optical phase modulator, mechanical phase modulator, nonlinear crystal, and/or FM-based modulator. This may also be done by modulating any characteristic of the light source unit **110** such as temperature control, cavity control, current control, etc. For example, frequency modulator **115** may operate to modulate input current to light source unit **110,** temperature, cavity length, or any other characteristics that vary emission frequency of the light source **110.**

Turning back to **Fig. 4****,** in some exemplary embodiments of the present disclosure, the system **100** may include a laser light source **110** providing emitted laser beam **B1** having a frequency *ω*₀. The optical arrangement **120** is configured to split light output of the laser unit **110** and direct reference and signal beams to a detection unit **140.** The laser beam **B1** may be split into two portions: a signal beam **IB** and a reference beam. The reference beam may be further split into two first **LO1** and second **LO2** reference beams. In this example, the first reference beam **LO1** does not undergo any frequency shift, while the second reference beam **LO2** undergoes a small, selected, frequency shift *ω*⁺. In addition, the amplitude (the optical power) of one of the reference beams may be selected to be different by a known factor. For example, the amplitude of the second reference beam **LO2** may be reduced by a known factor with respect to the amplitude of the first reference beam **LO1.** It should be noted that it does not matter which one of the reference beams is modulated or varied in amplitude with respect to the other one. In this example illustrated in **Fig. 4** the amplitude of the second reference beams **LO2** is arbitrarily set to be lower than the amplitude of first reference beams **LO1.** The collected signal beam **SB** interferes in the system with both reference beams, resulting in a temporal interference pattern including at least of two beating frequencies. One of them represents the value of the measured frequency and the second represents the direction (positive or negative) of the measured frequency as explained below.

As indicated above, the light source unit **110** includes a light source **112** (e.g., laser unit) and a frequency modifier **115,** where frequency modifier **115** is configured to apply periodic modulation to emitted light. The periodic modulation includes at least a first and a second modulation periods having different modulation within each period. Reference is made to **Fig. 5** exemplifying frequency modulation of the emitted light **S1**, and shifted frequency **S2,** e.g., associated with reflected signal carrying time delay and frequency shift *Ω* = *Ω₁+ Ω₂* caused by interaction with the target object. In this connection **Fig. 5** illustrates modulation of main frequency *ω*₀(*t*)*,* and the respective and resulting modulation of the shifted frequency beam being *ω*₀(*t*) + Ω. In this example, the beating signals collected by the detector relate to the difference between curves **S1** and **S2** during the respective modulation periods, providing beating frequency *fᵤₚ* and *f_{down}* during respective up and down modulations. As described in more detail further below, the two beating frequencies *fᵤₚ* and *f_{down}* provide data on distance and closing velocity of the target object, where in some examples, the distance may be determined by average between *fᵤₚ* and *f_{down},* while closing velocity can be determined based on Doppler shift associated with a difference between *fᵤₚ* and *f_{down}*.

As a result of a temporal delay between the reference beams (e.g. **LO1**) and the signal beam (**SB**) due to the finite speed of light and the range to the target object and back and the frequency modulation of the output beam **B1**, a frequency of the collected beating signals may vary with time in accordance with frequency modulation of the light source system, and the distance to the target object. The present technique utilizes determining first (*fᵤₚ*) and second (*f_{down}*) beating frequencies, collected respectively during first and second modulation periods and using the determined first and second frequency shifts to determine distance and doppler shift associated with a target object **50.** To properly determine sign of the first and second frequency shifts, the present technique utilizes predetermined frequency shift *ω*⁺ between two or more reference beams **LO1** and **LO2** (or two or more signal beams).

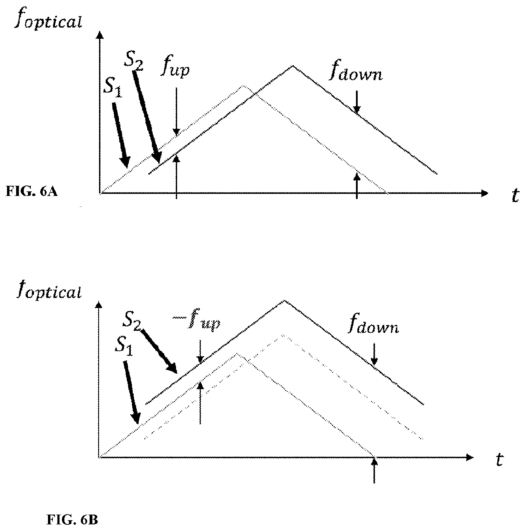

Similar frequency data is illustrated in **Figs. 6A to 6D** for different situations causing target frequency shift Ω. Such target frequency shift may be associated with distance to the object and/or Doppler shift caused by object movement. In accordance with direction and magnitude of the additional frequency shift, the actual frequency shift between the reference beam (**B1** associated with emitted light **S1**) and the collected signal beam (**SB** marked by **S2** in **Figs. 6A to 6D**) may be negative or positive. Generally, identifying the direction of a frequency shift may be important for determining proper relations between the first (*fᵤₚ*) and second (*f_{down}*) frequency shifts. Accordingly, as indicated above, the present technique utilizes at least two reference beams (or at least two signal beams) shifted between them by predetermined frequency shift *ω*⁺ enabling detection of direction (sign) of frequency shift of the collected signals.

More specifically, **Fig. 6A** exemplifies a situation where the frequency shift of the collected signal beam **S2** is characterized by time delay frequency shift and a small up shift in frequency relative to the delay shift. The up shift in frequency may be due to closing velocity and doppler effect. The example of **Fig. 6B** illustrates generally similar time delay, with increased up shift in frequency due to greater closing velocity of the target, to the level that the frequency of the collected signal **S2** is greater that the frequency of the reference beam **S1** during the first modulation period. To properly determine direction of the frequency shift in this situation, the use of additional, frequency shifted, reference (or signal beam) is beneficial.

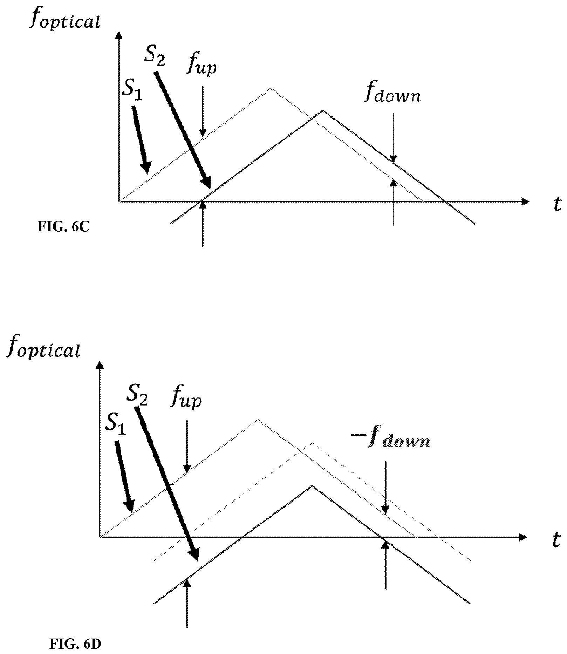

Additionally, **Figs. 6C and 6D** exemplify a situation in which the collected signal beam **S2** is delayed and down shifted, e.g., due to doppler shift. In **Fig. 6C** the doppler shift is small compared to the time-delay shift. **Fig. 6D** illustrates a generally similar time delay frequency shift, with greater down shifted frequency due to the doppler effect, to the level that during the second modulation period, the frequency of the collected signal beam **S2** is smaller than the frequency of the reference beam **S1.**

Due to the sign ambiguity in the detection of frequency shift, as detailed above, both *fᵤₚ* in the scenarios detailed in **Figs. 6A** and **6B** cannot be distinguished, as is the case with both *f_{down}* in **Figs. 6C** and **6D****.**

The technique of the present disclosure solves ambiguity in sign/direction of the frequency shift utilizing the second reference beam (**LO2**) or second signal beam, having predetermined frequency shift *ω*⁺. This is exemplified in **Fig. 4** using modulator **150** positioned and configured to modulate frequency of at least one of the two or more reference beams (or at least one of two or more signal beams) as described above.

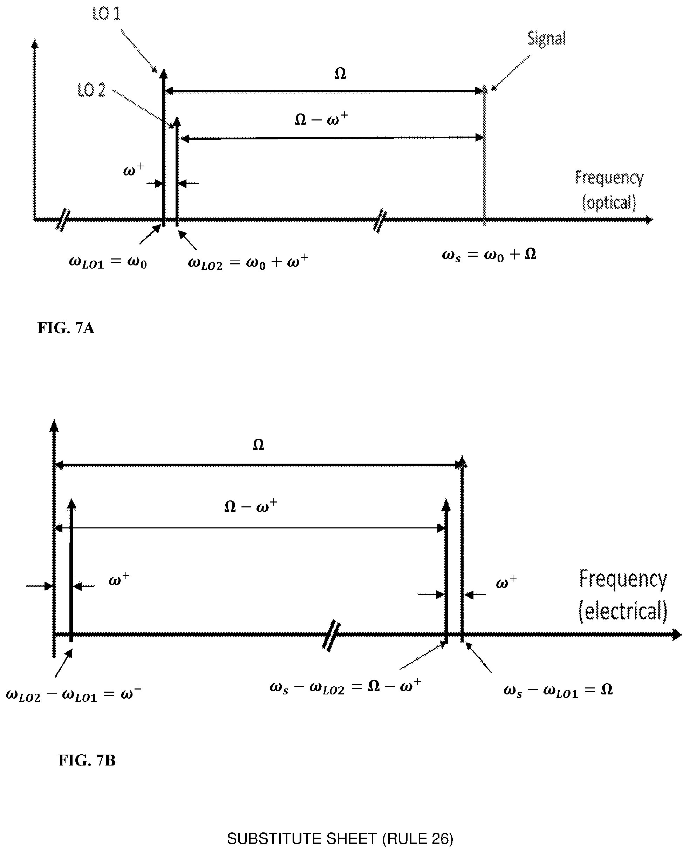

As described in more details and illustrated in **Figs. 7A to 7D** further below, the use of two or more reference beams (or two or more signal beams) being shifted between them by a predetermined frequency shift *ω*⁺ generates an additional beating frequency having frequency of Ω + *ω*⁺, where relative location, or the sign (+) or (-) indicates the sign or direction of frequency shift Ω.

More specifically, the detected frequency shifts *fᵤₚ* and *f_{down}* enable the system of the present disclosure to determine both distance of the target object and it's closing velocity (using Doppler shift) by determining respective difference and sum of the *f_{down}* and *f_{down}* beating frequencies. Generally, the measured frequency shifts *fᵤₚ* and *f_{down}* define directly specific distance and closing velocity of an object, while the relation may be determined based on frequency modulation in each of the first and second modulation periods. In the example of linear chirp up and chirp down modulation sections having similar chirp rate, the distance of the target object and it's closing velocity can be determined as follows: $d = \frac{c}{2 γ} \left({f}_{up}+{f}_{down}\right)$ (equation 3.1) $v = \frac{λ}{4} \left({f}_{up}-{f}_{down}\right)$ (equation 3.2) Equations 3.1 and 3.2 indicate the relation between frequency variations of the beating signals *fᵤₚ* and *f_{down}*, range to the target object *d* and its closing velocity *v*. Here *c* is the speed of light, *γ* is the chirp rate of the frequency modulated emitted light, and *λ* is the main wavelength of emitted light (about which the emitted light is modulated). It should be understood that the present technique may utilize various configurations of first and second modulations and that the relation between the first and second frequency shifts may vary in accordance with selection of the modulation type, chirp rates and directions, resulting in slightly different equations describing the range and velocity of the target.

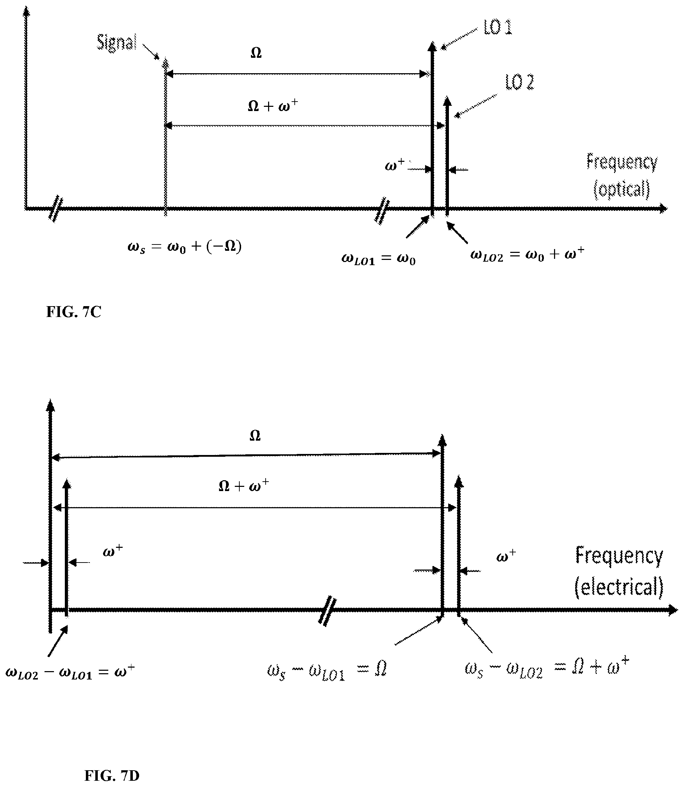

The collected optical signal **B2** and respective beating frequencies are described herein mathematically and with reference to **Figs. 7A** to **7D****.** **Fig. 7A** exemplifies optical signal including frequency of the signal beam **SB** and beating frequencies of interference of the signal beam with the first and second reference beams for a case of positive frequency shift by the object, and **Fig. 7B** exemplifies frequencies of electrical signal output of the detector unit **140** for the respective signal. **Fig. 7C** exemplifies frequencies of the optical signal for the case of negative object frequency shift, and **Fig. 7D** exemplifies corresponding electrical signal frequencies. It should be understood that the terms "positive" and "negative" are used herein to describe two opposite directions of the frequency shift and may be replaceable in accordance with structure of peak pattern associated with the selected frequency shift *ω*⁺ and relative amplitude between the two or more reference (or signal) beams.

Accordingly, **Figs. 7A** to **7D** exemplify an analysis of the optical signals that enter the photodetector in the system such as exemplified in **Fig. 4** as follows:
Accordingly, analysis of the optical signals collected by the detection unit **140** as exemplified in **Fig. 4** generally indicates three signals:
The **LO1** beam: having the laser frequency: *ω*_{*LO*1} *= ω*₀(*t*)*,* and its electromagnetic wave can be described by (neglecting phase term): ${E}_{LO 1} {e}^{- i {ω}_{LO 1} t} = {E}_{LO 1} {e}^{- i {ω}_{0} \left(t\right) t}$

The **LO2** beam: having frequency shifted by *ω⁺* from *ω*_{*LO*1} providing: *ω*_{*LO*2} *= ω*₀(*t*) + *ω*⁺, and its amplitude is lower by a selected factor *ε*<1 from *E*_{*LO*1} so that: |*E*_{*LO*2}| *= ε*|*E*_{*LO*1}|*.* Thus, its electromagnetic wave is given by (neglecting phase term): ${E}_{LO 2} {e}^{- i {ω}_{LO 2} t} = ε {E}_{LO 1} {e}^{- i \left({ω}_{0}\left(t\right)+{ω}^{+}\right) t}$

The collected signal beam is frequency shifted by an unknown Ω, so that the collected signal's frequency in the system is *ωₛ*(t) = *ω*₀(t) + Ω. Its amplitude depends on the system, the target, and the measurement conditions, and is generally unknown. The electromagnetic wave of this signal is given by (neglecting phase term): ${E}_{SIG} {e}^{- i {ω}_{s} t} = {E}_{SIG} {e}^{- i \left({ω}_{0}\left(t\right)+Ω\right) t}$ Where the frequency shift Ω relates to frequency shift associated with distance that can be represented by addition of Δ*t=2l*/*c* to the phase element, corresponding to target's distance *l*, and Doppler frequency shift, corresponding to the target's closing velocity. Certain time delay may be associated with light propagation through the reference arms. However, the time delay for light propagation through the reference arms may be controlled by predetermined length of the reference arms and proper calibration and is generally fixed for a given system configuration.

The electromagnetic wave of these optical signals as collected by the detector unit is the superposition of all of them transmitted within the interference beam **B2.** Thus, the electromagnetic field signal that enters to the photodetector is given by (neglecting phase term): ${E}_{Total} = {E}_{LO 1} {e}^{- i {ω}_{0} \left(t\right) t} + {E}_{LO 2} {e}^{- i \left({ω}_{0}\left(t\right)+{ω}^{+}\right) t} + {E}_{SIG} {e}^{- i \left({ω}_{0}\left(t\right)+Ω\right) t}$

The electrical signal that is produced by the detector contains three interference patterns associated with these frequencies. Relation between the interference patterns and the respective frequencies provides direct indication to direction and magnitude of the unknown frequency shift Ω, which can be directly determined from frequency of the collected signal.

As indicated above, the emitted light may be split into the first and second reference arms **LO1** and **LO2** with predetermined, uneven intensity portions. This allows the present technique to identify frequency shift of the collected light (signal beam) and differentiate between positive and negative frequency shift. The use of two or more reference arms, or two or more signal beams, having predetermined frequency and amplitude difference between them, provides a detectable predetermined peak pattern as exemplified in **Figs. 7B** **and** **7D****.** This enables the system and method of the present disclosure to determine the frequency shift Ω associated with the target object including magnitude and direction of the shift, while providing an easy to detect pattern that can be distinguished over noisy signals.

In this connection, according to some embodiments, the present disclosure utilizes a predetermined, uneven, split of light between the two or more reference arms, or between two or more signal beams. The uneven split enables detection between first higher beating frequency peak, and a second lower beating frequency peak constructing the respective signals. Additionally, this enhances signal to noise ratio and enables computer-based analysis of the collected signals. This is as identifying a selected pattern, associated with combined signals formed a first and second signals with predetermined magnitude ratio between them, is easily distinguishable over background noise.

Accordingly, **Figs. 7A and 7B** exemplify a frequency shift Ω in one direction (e.g., positive) resulting with a peak pattern formed by a second peak being to the left of the first peak Ω (i.e., at *Ω* - *ω⁺*) in **Fig. 7B****.** Further, **Figs. 7C and 7D** exemplify a frequency shift Ω in the opposite direction (e.g., negative) resulting with a peak pattern formed by a second peak being right to the first peak Ω (i.e., at *Ω* + *ω⁺*) shown in **Fig. 7D****,** indicating that the direction of the measured frequency Ω is negative.

Accordingly, as described herein, the system, and respective method of the present disclosure enables optical measurement of one or more parameters of an object, including e.g., distance, velocity, and other parameters that can be manifested by a frequency shift to an interrogating beam, and allows for differentiating between positive frequency shift and negative frequency shift. Additionally, the technique of the present disclosure utilizes signals having a specific peak pattern in frequency domain as exemplified in **Figs. 7B** **and** **7D****,** making it efficiently recognizable even at a noisy environment. The output electrical spectrum pattern contains peak pattern formed by two peaks that are separated by a specific and known frequency shift, *ω*⁺, and manifesting a specific and known amplitude/ intensity ratio between the peaks. Thus, the system of the present disclosure is more robust to noise. This is as recognizing such a specific peak pattern at a noisy environment (due to noises in the system or in the environment or due to a weak signal) is more reliable than recognizing a single peak (as usually done in interferometric systems with one LO) that might be generated by a random peak in the noise or hidden by the noise.

Considering exemplary detection of a frequency shift *Ω* < 0 affecting the signal beam. The LO1 and LO2 frequencies may be *ω_{LO1}* = *ω*₀, and *ω_{LO2}* = *ω*₀ + *ω*⁺, and the signal is frequency-shifted at a frequency (-*Ω*), so that the collected signal's optical frequency in the system is *ωₛ* = *ω*₀ - Ω. Similar but opposite analysis may be performed for positive frequency shift *Ω* > 0.

The mixed output (in the electrical spectrum) of the system contains three frequencies as illustrated in **Fig. 7D****,** LO1-LO2, LO1-SIG, and LO2-SIG.
1. LO1-LO2: The interference between the two LO beams at a known predetermined frequency: |*ω*_{*LO*2} - *ω*_{*LO*1}| = *ω⁺.*
2. LO1-SIG: The interference between the (higher amplitude) LO1 and the signal at a frequency: |*ωₛ* - *ω*_{*LO*1}| = |*Ω*|.
3. LO2-SIG: The interference between the (lower amplitude) LO2 and the signal at a frequency: |*ωₛ* - *ω*_{*LO*2}| *=* |(*ω*₀ - Ω) - (*ω*₀ + *ω⁺*)| = |*Ω + ω⁺*|*.*

The first two signals (LO1-LO2 and LO1-SIG) are the same in the case of the positive frequency shift *Ω* > 0. However, in that case, the third signal LO2-SIG is |*Ω* - *ω*⁺| resulting in opposite peak pattern direction. It is understood since as above mentioned the LO1-LO2 is not affected by the measured signal and the LO1-SIG represents only the value of the signal frequency and not its direction. However, the LO2-SIG (that represents the direction of the signal frequency) at a frequency *Ω + ω*⁺ differs from the positive frequency case (in which the signal was at a frequency *Ω* - *ω⁺*)*.* Note that, given system design parameters, in the case of a measured frequency shift in one direction (e.g., positive) the higher peak of the peak pattern is the right one (**Fig. 7B**), and in the case of a measured frequency shift to the opposite direction (e.g., negative) the higher peak is on the left of the peak pattern (**Fig. 7D**).

Accordingly, the present disclosure, according to some embodiments thereof, provides an interferometric\coherent system and method, utilizing interference of frequency modulated signal enabling to determine frequency shifts due to two different sources applied to a signal beam (e.g., doppler shift applied by a moving target object, and distance to the target object). The technique of the present disclosure is capable of determining direction and magnitude of the frequency shift.

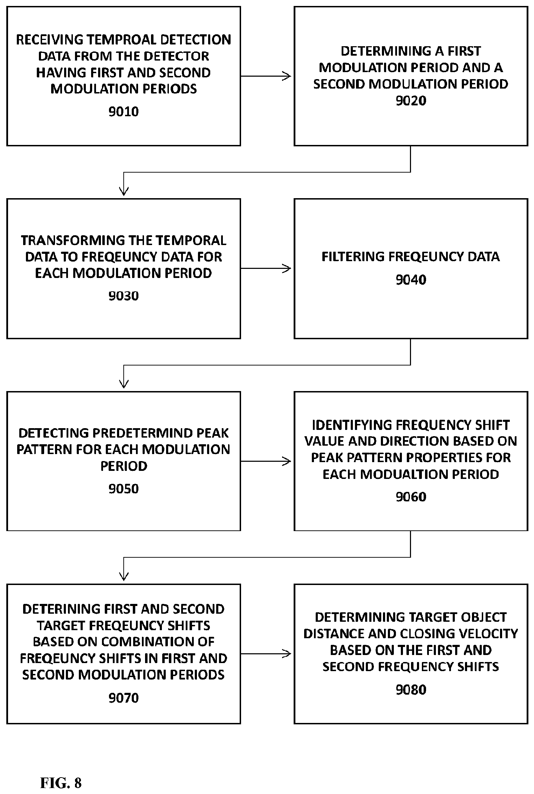

Reference is made to **Fig. 8** exemplifying a method for determining frequency shift of two types (e.g., distance and velocity) associated with one or more target objects. As shown, the method includes receiving temporal detection data **9010.** The detection data is collected by one or more detectors and includes at least first and second modulation periods. To determine data on the target, the method includes determining data sections associated with the first and with the second modulation periods **9020,** and determining separately frequency components of the data for the first and for the second modulation periods **9030.** In some cases, the frequency data may be filtered **9040** to reduce noise and simplify analysis. For example, the filtering may be used to filter out peak associated with fixed beating frequency *ω*⁺. Further, for each of the modulation periods, the method includes detecting, for each of the modulation periods, a predetermine peak pattern **9050.** The peak pattern is determined as described above with reference to **Figs. 7B** **and** **7D****.** Based on the predetermined peak patterns, the method includes identifying frequency shift magnitude and sign for each of the first and second modulation periods **9060.** This provides data on the *fᵤₚ* and *f_{down}* frequency shifts, enabling to determine data on two different sources of frequency shift caused by the target object **9070.** For example, the two different frequency shifts may relate to distance to the target object and velocity of the object as described above with reference to equations 3.1 and 3.2. Generally, the method may further include determining distance to the target object, and its closing velocity based on the first and second frequency shifts **9080.**

It should further be noted that the technique of the present disclosure enables relatively high sensitivity to doppler shifts as compared to RF or microwave radar systems. More specifically, the frequency variation associated with Doppler shift is given by ${f}_{Doppler} = \frac{2 v}{λ}$. Assuming object velocity in the order of 10m/s and typical wavelength *λ*=*1.5µm* (IR illumination), the resulting frequency shift is given by ${f}_{Doppler} = \frac{2 v}{λ} = \frac{2 ⋅ 10 m / s}{1.5 μm} ∼ 13.3 MHz$ . Detection of similar closing velocity using 10mm RF signals results is Doppler shift that is given by ${f}_{Doppler} = \frac{2 v}{λ} = \frac{2 ⋅ 10 m / s}{10 mm} ∼ 2 KHz$, which provides lower sensitivity and accuracy to target velocity. Thus, the present technique may be used with optical signals providing high sensitivity to Doppler shifts that may be negligible when collected by RF systems.

Additionally, the technique of the present disclosure can be implemented using a common optics for transmission of output beam and collection of signal beam reflected from the object as exemplified in **Fig. 4** above or utilize separated transmission and collection optics. When using common optics, reflection of the output beam from the transmission/collection optics may be collected by the detector resulting in additional noise in the system. Using the technique of the present disclosure, the interference signals of the reflections in the system due to the use of common optics and the reference beams can be easily and effectively filtered out. This is as the interference between the reflected portion of the transmitted beam is of fixed frequency, being relatively close to the predetermined frequency shift *ω*⁺, which may be relatively small. This is while desired signal frequencies Ω may be of relatively high frequency. Accordingly, the present technique may use high-pass filter (HPF) and/or low-pass filter may be used to remove undesired reflections. An additional advantage of the present disclosure is that the signal that interferes with the two reference beams can be effectively distinguished at a noisy environment based on generally known and unique peak pattern on the electrical spectrum of the mixed signal: two peaks that are separated by a specific known frequency shift and manifesting a specific known amplitude-ratio, and experience chirp up and chirp down sections with known first and second modulation periods. The direction (positive or negative) of the signal frequency is determined by the direction of the higher peak relative to the lower peak on the electrical spectrum.

Thus, the present disclosure provides a system and method for combined optical measurement of closing velocity and distance of a target object. This may be used for generating accurate data on surrounding objects including distance measurement and data of objects' velocity. The present technique utilizes interference of a signal beam having unknown shifted frequency *Ω* and time delay, to be determined with main frequency beam *ω*₀ and shifted frequency beam *ω*₀ + *ω*⁺, this is by proper modulation of the signal and reference frequencies and determining interference between them. This may be implemented using two reference beams and a single signal beam, or two signal beams (where one is shifted by (*ω*⁺) and one reference beam.

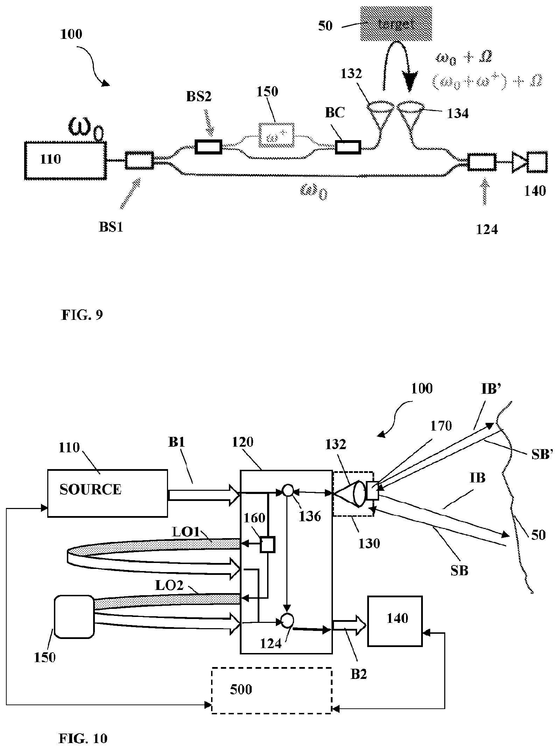

Further to the exemplified configuration of **Figs. 4** above, the system of the present disclosure may utilize several other configurations as exemplified herein below in **Fig 9****,** illustrating a system **100** configuration using two signal beams and one reference beam. More specifically, the radiation source **110** generates output beam having periodic modulation including first and second modulation periods as indicated above. The beam is first split to interrogating arm and reference arm using a first beam splitter **BS1.** The reference arm propagates toward a beam combiner **124.** The interrogating arm includes a second beam splitter **BS2** splitting the beam into first and second beam portions, where a first beam portion is maintained at original frequency *ω*₀, and the second beam portion is frequency shifted by modulator **150** by the known shift *ω*⁺. The two interrogating beam portions are combined using beam combiner **BC** and transmitted toward a target using transmission optics **132.** Reflected radiation from the target is collected by collection optics **134** and combined using beam combiner **124** with reference beam to generate interference signal, which is detected by detector **140.**

In this configuration the system utilizes two or more signal beams having a frequency shift *ω*⁺ between them, while being transmitted using common transmission optics **132.** The collected signal is collected using collection optics **134** forming a bistatic optical arrangement. As described above, with reference to **Fig. 4****,** the optical system **100** may be configured as a monostatic optical system utilizing common transmission and collection optics. Further, as described above, amplitude of one of the signal beams is reduced by a known factor compared to the other. This configuration may utilize signal detection and analysis similar to the described above.

The system of the present disclosure may be used for collecting range and/or velocity of target objects point by point. In some embodiments, the system may utilize an arrangement of light sources and respective optical arrangements for monitoring and detecting range and velocity with respect to selected number of angles within a field of view. Further, in some embodiments, the system may utilize scanning for collecting range and velocity data from a selected field of view.

In this connection, it should be noted that the system of the present disclosure may be implemented using various optical arrangements, including for example, free space propagation of optical radiation, optical fiber arrangement, planar lightwave/circuit (PLC), waveguide arrangement, photonic integrated circuit, or any combination of these configurations. Selection of type of optical path in which the system is implemented may be based on application, required stability and robustness of the system and/or costs.

In this connection, **Fig. 10** exemplify system **100** utilizing one or more scanners **170** configured to direct output interrogating beam **IB** toward different selected regions within a selected field of view providing additional interrogating beams **IB',** and to collect reflected signal beam **SB** and **SB'** from the respective selected regions. Scanner **170** may be positioned upstream or downstream to transmission/collection optics **130** (being separated transmission and collection optics or combined as exemplified in **Fig. 10**). The scanner **170** may be a rotating mirror, MEMS scanner, galvanometric scanner, polygon mirror, voice coil driven mirror, optical phased array, optical switch, or any other suitable scanner. Scanner **170** can operate with any selected scanning rate with scan rate (either in continuous scan or using step scan) providing sufficient sampling time for each position for collecting data with sufficient frequency bandwidth. For each scan position, the system may be operable by control unit **500** for performing the analysis described above using the first and second modulation periods of the light source **110.**

Further, in some embodiments, a system arrangement may be used, configured of a one-dimensional array of systems **100,** or one system **100** with an array of interrogating beams **IB,** and a one- or two-dimensional scanner configured to scan along an axis perpendicular to axis of arrangement of the array. Each sub-system of the array provides data on a selected angular range within a field of view, and the scanner provides scanning to cover the entire field of view.

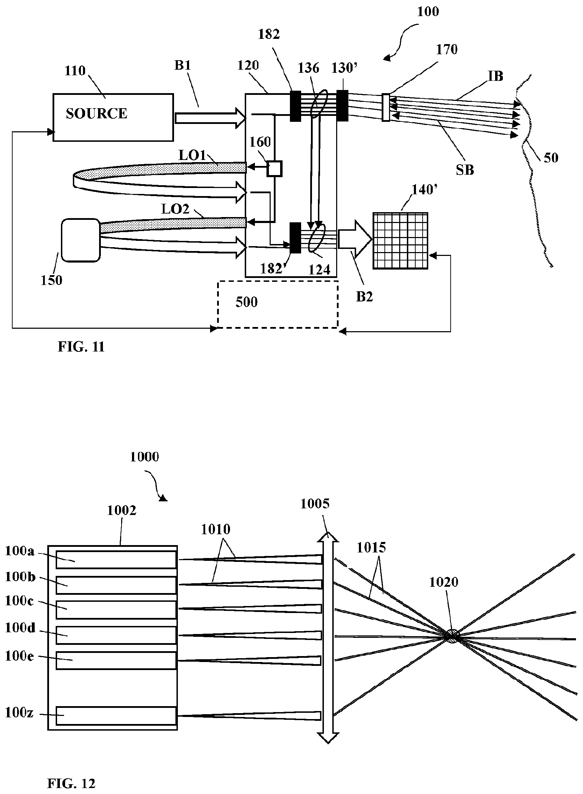

In this connection, reference is made to **Fig. 11** exemplifying an additional configuration of optical system **100** according to some embodiments of the present disclosure. System **100** in the example of **Fig. 11** includes a light splitting optical element **182,** receiving the signal beams and configured to split the signal beams into a plurality of beams. Transmission/collection optics **130'** is configured to receive the plurality of beams and transmit a plurality of interrogating beams **IB** toward a plurality of locations in a field of view, e.g., covering different points on object **50.** Interrogating beams **IB** may be directed to a selected number of different angular regions of a field of view, thereby enabling monitoring of different angular sections of the field of view. Transmission/collection optics **130'** is further configured to collect a plurality of signal beams **SB** reflected from the plurality of locations in the field of view back into the system **100.**

Additional one or more light splitting optical element **182'** is configured to receive the reference beams **LO1** and **LO2** and split the reference beams into a similar plurality of reference beams portions. Light splitting optical element **182'** may receive combined input of the reference beams **LO1** and **LO2.** Alternatively, the system may utilize two or more light splitting elements **182'** for each of the two or more reference beams, and respective beam combiners for directing the reference and signal beams to common detector elements. The plurality of the split beam portions, including signal beams and reference beams are interfered separately, to provide a respective interference beam **B2** for each location of the field of view in accordance with arrangement of plurality of interrogating beams **IB.** Further, the different portions of the interference beams **B2** are detected by respective detection element, exemplified by arrangement of detectors **140'.** Arrangement of detectors **140'** may be a one-dimensional array of detectors, or two-dimensional array, in accordance with spatial arrangement of the split beams when combined in interference beams **B2.** This configuration utilizes a single light source unit **110** and optical arrangement **120,** while providing a plurality of interrogating beams enabling simultaneous detection of range and/or velocity parameters of objects within a field of view. Further, this configuration may be used to provide scanning of a field of view by monitoring regions of the field of view in each scan location using scanner **170.**

**Fig. 12** illustrates a further configuration of detection system **1000** according to some additional embodiments of the present disclosure. Detection system **1000** includes optical systems array **1002** formed of a plurality of optical systems **100a-100z** arranged in a one-dimensional array, optical lens arrangement **1005** and scanner **1020.** Each of the optical systems **100a-100z** is configured as described above by system **100.** In this connection, optical systems **100a-100z** may relate to split beam portions as described above with respect to **Fig. 11****,** utilizing common light source and optical arrangement units.

The optical systems **100a-100z** may be configured using common or separate transmission/collection optics and may be configured to utilize two or more reference beams and/or two or more interrogating/signal beams. Additionally, optical systems array **1002** may be configured as an optical system on a chip, having a plurality of optical arrangements **100a-100z** arranged on a common, or two or more separate, chips, and configured to provide an array of output beams **1010.**

The array of output beams **1010** is transmitted toward optical lens arrangement **1005** positioned and configured to convert lateral location of the beams **1010** to angular directions of the beams, such that each of the beams **1010** covers a selected angular range of a one-dimensional field of view, such that the plurality of optical systems **100a-100z** cover a selected one-dimensional field of view.

Detection system **1000** may further include a scanner **1020,** e.g., scanning mirror, located generally around focal point of optical lens arrangement **1005.** Scanner **1020** is configured to scan along a selected axis, generally perpendicular to an axis defined by arrangement of the optical systems **100a-100z.** Thus, the plurality of optical systems **100a-100z** cover angular sections along a selected first axis, and scanner **1020** provides scanning along a second, generally perpendicular axis, together covering an entire selected field of view. This configuration provides for relatively fast scanning of a field of view, as compared to two-dimensional scan, e.g., using the system configuration illustrated in **Fig. 4** and an additional scanner, and provides increased range with respect to field illumination, e.g., using the system configuration as illustrated in **Fig. 10****.** In some examples, the system configuration of **Figs. 11** **and/or 12** may provide scanning/frame rate of 30 frames per second and may enable detection range of 250meter or more. It can also provide a scanning rate of 30 scans per second, with a frame rate of 10 frames per second, resulting with 3 scans per system per frame, each with a slightly different vertical position relative to the generally perpendicular scan axis. It can also provide a scanning rate of 10 scans/ frames per second, resulting in a higher resolution scan.

Accordingly, the optical system **100** or **1000** may utilize a transmission/collection beam splitting arrangement **182** with or without a lens arrangement **1005,** said transmission/collection beam splitting arrangement **182** is configured to split the one or more signal beams to a selected number of interrogating beams **1015** providing data on a plurality of locations on the object **50** or within a field of view. The lens arrangement **1005** when used may be positioned to direct the selected number of beams to cover a selected number of angular regions within a field of view. This configuration may enable detection of range and/or velocity of a plurality of locations within a selected field of view. This configuration may further utilize scanning, e.g., using scanner **1020** or **170** to cover a larger field of view.

Accordingly, as indicated above, it should be noted that the at least two reference beams (or at least two signal beams) are separated between them by a predetermined and known frequency shift *ω*⁺. This may be applied by using frequency shifter in path of one of the beams, or in path of both beams, providing different shifts (e.g., positive and negative frequency shifts). Additionally, the two reference (or signal) beams are preferably configured with different amplitudes, to enable distinguishing between them. Generally, it matters not which of the two reference beams (or signal beams) is reduced by amplitude as long as the selection is pre-known (and stored in memory of a controller of the system). The signal may be analyzed by determining two peaks having known amplitude ratio. Lowering the amplitude of one arm in relation to the second arm can be achieved in many ways. For example, the system may utilize a non-symmetric beam splitter, optical attenuator, or any other way.

The principle presented in the present disclosure can be implemented in different wavelength regimes including e.g., optical spectrum, infrared, radio frequency, UV, or any other EM radiation, and even in acoustic waves systems. As indicated above, shorter wavelength may provide enhanced sensitivity to doppler shifts within typical ground velocity. The term optical or light used herein are to be interpreted broadly as relating to electromagnetic radiation. It should however be noted that the present invention is advantageous at infrared or high frequencies (visible, UV etc.) where typical detectors are limited in direct sampling of beam frequency *ω*₀.

It should also be noted that the system of the present disclosure may be implemented in free-space propagation, optical fibers, optical circuit on a chip, or any other technique or combination of them.

The system of the present disclosure may be implemented using a single lens design. More specifically, a common optical element is used to output transmitted beam toward the target and to input a collected reflected beam from the target into the system. This configuration simplifies registration and alignment, while may generate high internal reflections. The present disclosure utilizes selected pattern of frequencies in the detected signal that allows for ignoring such high reflections. It should however be noted that in some configurations, the present technique may be implemented using separate transmission and collection optics in accordance with system design requirements. To this end, the system of the present disclosure may utilize a circulator, 1X2 coupler, polarization beam splitter, or any other suitable optical element for directing collected light toward interference with the reference beams and detection thereof.

The system of the present disclosure may thus be used for various applications including, but not limited to, lidar configuration, various sensing and metrology applications such as doppler vibrometry, medical application including doppler imaging, optical coherence tomography (OCT) etc.

It is to be noted that the various features described in the various embodiments can be combined according to all possible technical combinations.

It is to be understood that the invention is not limited in its application to the details set forth in the description contained herein or illustrated in the drawings. The invention is capable of other embodiments and of being practiced and carried out in various ways. Hence, it is to be understood that the phraseology and terminology employed herein are for the purpose of description and should not be regarded as limiting. As such, those skilled in the art will appreciate that the conception upon which this disclosure is based can readily be utilized as a basis for designing other structures, methods, and systems for carrying out the several purposes of the presently disclosed subject matter.

Those skilled in the art will readily appreciate that various modifications and changes can be applied to the embodiments of the invention as hereinbefore described without departing from its scope, defined in and by the appended claims.

## Claims

1. An optical system (100) comprising a light source unit (110), an optical arrangement (120), and a detection unit (140);
the light source unit (110) is configured to provide optical emission (B1) of a selected wavelength range directed to propagate in the optical arrangement (120);
the optical arrangement (120) comprises a beam splitting arrangement configured to split received optical emission from the light source unit (110) into at least three beams comprising at least two reference beams (LO1, LO2) and at least one signal beam (IB) or at least two signal beams (IB) and at least one reference beam (LO1, LO2);
the optical arrangement (120) is further configured to direct the one or more signal beams (IB) toward a target object (50), collect light reflected from said target object (50) forming one or more reflected beams (SB);
wherein said optical arrangement (120) further comprises a frequency shifter (150) configured to shift frequency of one of said at least two reference beams (LO1, LO2) or one of said at least two signal beams (IB) by a selected frequency shift;
wherein said light source (110) unit is configured to provide frequency modulated optical emission comprising at least first (*fᵤₚ*) and second (*f_{down}*) different modulations ; and
wherein the optical arrangement (120) further comprises a beam combiner (124) configured to receive the collected reflected portion (SB) and reference beams (LO1, LO2) and to combine the received beams to a combined interference beam (B2), said detection unit (140) is configured for detecting the combined interference beam (B2) and to generate output data indicative of frequency components of said combined interference beam (B2), said data indicative of frequency components being indicative of frequency shift generated by said target object (50).

2. The optical system of claim 1, wherein said optical arrangement (120) is configured to affect intensity of said at least two reference beams (LO1, LO2) or at least two signal beams (IB) to generate a predetermine intensity relation between said at least two reference beams (LO1, LO2) or at least two signal beams (IB).

3. The optical system of claim 2, wherein said optical arrangement (120) comprises at least one power attenuator (160) configured to reduce light intensity in one of said at least two reference beams (LO1, LO2) or said at least two signal beams (IB), thereby enabling differentiating between said at least two beams.

4. The optical system of claim 2 or 3, wherein said optical arrangement (120) comprises an asymmetric beam splitter (160) configured for splitting said received optical emission to form said at least two reference beams (LO1, LO2) or said at least two signal beams (IB) having predetermined intensity relation between them.

5. The optical system of any one of claims 1 to 4, wherein said frequency shifter (150) comprises one or more of phase modulator, frequency modulator, IQ modulator, electro-optical modulator, acousto-optical modulator, or a delay line extending optical path of said one of said at least two reference beams (LO1, LO2) or one of said at least two signal beams (IB) by a selected length, thereby generating said selected frequency shift.

6. The optical system of any one of claims 1 to 5, wherein said light source unit (110) comprises at least one laser unit (112) and one or more respective frequency modulators (115) operable to provide frequency modulated optical emission comprising at least first and second different modulations.

7. The optical system of any one of claims 1 to 6, wherein said frequency modulated optical emission (B1) is periodically modulated.

8. The optical system of any one of claims 1 to 7, wherein said at least first and second different modulations comprise at least one of: (i) at least a chirp up modulation and a chirp down modulation, or (ii) at least first and second chirped signal having respective first and second different chirp rates.

9. The optical system of any one of claims 1 to 8, further comprising a control unit (500) configured for receiving detection data from the detector unit (140) and utilize detection of interference of said at least three beams with respect to said at least first and second different modulations to determine range to said target object (50) and closing velocity of said target object (50); said control unit (500) is configured to determine beating frequency of interference between said at least three beams, and to determine difference and average between said beating frequencies associated with said at least first and second different modulations to determine range to said target object (50) and closing velocity thereof.

10. The optical system of any one of claims 1 to 9, further comprising a scanner (170) configured to direct said one or more signal beams (IB, IB') toward one or more target objects (50) covering a selected field of view.

11. The optical system of any one of claims 1 to 10, further comprising a transmission/collection beam splitting arrangement (182) and a lens arrangement (1005), said transmission/collection beam splitting arrangement (182) is configured to split said one or more signal beams (IB) to a selected number of parallel beams, and said lens arrangement is positioned to direct said selected number of parallel beams to cover a selected number of angular regions within a field of view, thereby enabling detection of range and velocity of a plurality of location within said field of view.

12. The optical system of any one of claims 1 to 11, wherein said optical arrangement (120) comprises a transmission/collection optics (130, 130', 132) configured for directing said one or more signal beams (IB) toward a target object (50) and for collecting light (SB) reflected from said target object (50), said transmission/collection optics (130, 130', 132) comprises one or more quarter wave plates located in path of signal beam (IB) and of reflected light (SB) and configured to rotate polarization of reflected light (SB) with respect to transmitted beam (IB).

13. The optical system of any one of claims 1 to 12, further comprising at least one optical amplifier (200) positioned and configured to amplify intensity of at least one of beam portions transmitted toward said one or more target objects (50) or the one or more of the reference beams.

14. A method for determining range and closing velocity of one or more target objects (50), the method comprising:
providing coherent illumination (B1) having a selected wavelength range, splitting said coherent illumination to at least three illumination portions comprising at least one signal portion (IB) and at least one reference portion propagating along at least one reference arm (LO1, LO2), said providing coherent illumination (B1) comprises providing frequency modulated coherent illumination having at least first and second frequency modulations having at least first and second different frequency modulation;
applying a selected frequency shift to at least one of said at least three illumination portions;
directing the at least one signal portion (IB) toward a target object (50), and collecting signal portions (SB) reflected back from said target object (50); and
utilizing output data indicative of frequency components of said combined beam (B2) at said at least first and second frequency modulations having at least first and second different frequency modulations and determining range and closing velocity of said target object (50)
wherein the method comprising combining said at least three illumination portions (SB, LO1, LO2) to generate a combined beam (B2), detecting intensity of the combined beam (B2) and determining the frequency components of said combined beam (B2) with a selected sampling bandwidth.

15. The method of claim 14, wherein determining direction of frequency shift comprises determining frequency order between first and second frequency components of the combined beam associated with said selected frequency shift and frequency shift applied by said target object in accordance with relative amplitude between them.

## Patentansprüche

1. Optisches System (100), umfassend eine Lichtquelleneinheit (110), eine optische Anordnung (120) und eine Detektionseinheit (140);
wobei die Lichtquelleneinheit (110) konfiguriert ist, um eine optische Emission (B1) eines ausgewählten Wellenlängenbereichs bereitzustellen, gerichtet auf eine Ausbreitung in der optischen Anordnung (120);
die optische Anordnung (120) eine Strahlteileranordnung umfasst, die konfiguriert ist, um empfangene optische Emission von der Lichtquelleneinheit (110) in mindestens drei Strahlen aufzuteilen, umfassend mindestens zwei Referenzstrahlen (LO1, LO2) und mindestens einen Signalstrahl (IB) oder mindestens zwei Signalstrahlen (IB) und mindestens einen Referenzstrahl (LO1, LO2);
die optische Anordnung (120) ferner konfiguriert ist, um den einen oder die mehreren Signalstrahlen (IB) in Richtung eines Zielobjekts (50) zu richten, von dem Zielobjekt (50) reflektiertes Licht zu sammeln, unter Bildung eines oder mehrerer reflektierter Strahlen (SB);
wobei die optische Anordnung (120) ferner einen Frequenzschieber (150) umfasst, der konfiguriert ist, um die Frequenz eines der mindestens zwei Referenzstrahlen (LO1, LO2) oder eines der mindestens zwei Signalstrahlen (IB) um eine ausgewählte Frequenzverschiebung zu verschieben;
wobei die Lichtquelleneinheit (110) konfiguriert ist, um eine frequenzmodulierte optische Emission bereitzustellen, umfassend mindestens erste *(fᵤₚ)* und zweite *(f_{down})* unterschiedliche Modulationen; und
wobei die optische Anordnung (120) ferner einen Strahlkombinierer (124) umfasst, der konfiguriert ist, um den gesammelten reflektierten Anteil (SB) und Referenzstrahlen (LO1, LO2) zu empfangen und die empfangenen Strahlen zu einem kombinierten Interferenzstrahl (B2) zu kombinieren, wobei die Detektionseinheit (140) konfiguriert ist, um den kombinierten Interferenzstrahl (B2) zu detektieren und Ausgabedaten zu erzeugen, die Frequenzkomponenten des kombinierten Interferenzstrahls (B2) anzeigen, wobei die Frequenzkomponenten anzeigenden Daten eine durch das Zielobjekt (50) erzeugte Frequenzverschiebung anzeigen.

2. Optisches System nach Anspruch 1, wobei die optische Anordnung (120) konfiguriert ist, um die Intensität der mindestens zwei Referenzstrahlen (LO1, LO2) oder der mindestens zwei Signalstrahlen (IB) zu beeinflussen, um eine vorbestimmte Intensitätsbeziehung zwischen den mindestens zwei Referenzstrahlen (LO1, LO2) oder den mindestens zwei Signalstrahlen (IB) zu erzeugen.

3. Optisches System nach Anspruch 2, wobei die optische Anordnung (120) mindestens einen Leistungsabschwächer (160) umfasst, der konfiguriert ist, um die Lichtintensität in einem der mindestens zwei Referenzstrahlen (LO1, LO2) oder der mindestens zwei Signalstrahlen (IB) zu reduzieren, wodurch ein Unterscheiden zwischen den mindestens zwei Strahlen ermöglicht wird.

4. Optisches System nach Anspruch 2 oder 3, wobei die optische Anordnung (120) einen asymmetrischen Strahlteiler (160) umfasst, der zum Teilen der empfangenen optischen Emission konfiguriert ist, um die mindestens zwei Referenzstrahlen (LO1, LO2) oder die mindestens zwei Signalstrahlen (IB) mit einer vorbestimmten Intensitätsbeziehung zueinander zu bilden.

5. Optisches System nach einem der Ansprüche 1 bis 4, wobei der Frequenzschieber (150) einen oder mehrere von einem Phasenmodulator, Frequenzmodulator, IQ-Modulator, elektrooptischen Modulator, akustooptischen Modulator oder einer Verzögerungsleitung umfasst, die den optischen Pfad des einen der mindestens zwei Referenzstrahlen (LO1, LO2) oder eines der mindestens zwei Signalstrahlen (IB) um eine ausgewählte Länge verlängert, wodurch die ausgewählte Frequenzverschiebung erzeugt wird.

6. Optisches System nach einem der Ansprüche 1 bis 5, wobei die Lichtquelleneinheit (110) mindestens eine Lasereinheit (112) und einen oder mehrere jeweilige Frequenzmodulatoren (115) umfasst, die betreibbar sind, um eine frequenzmodulierte optische Emission bereitzustellen, die mindestens erste und zweite unterschiedliche Modulationen umfasst.

7. Optisches System nach einem der Ansprüche 1 bis 6, wobei die frequenzmodulierte optische Emission (B1) periodisch moduliert ist.

8. Optisches System nach einem der Ansprüche 1 bis 7, wobei die mindestens ersten und zweiten unterschiedlichen Modulationen mindestens eines umfassen von: (i) mindestens eine Aufwärts-Chirp-Modulation und eine Abwärts-Chirp-Modulation oder (ii) mindestens ein erstes und ein zweites gechirptes Signal mit jeweiligen ersten und zweiten unterschiedlichen Chirp-Raten.

9. Optisches System nach einem der Ansprüche 1 bis 8, ferner umfassend eine Steuereinheit (500), die konfiguriert ist, um Detektionsdaten von der Detektoreinheit (140) zu empfangen und die Detektion von Interferenz der mindestens drei Strahlen in Bezug auf die mindestens ersten und zweiten unterschiedlichen Modulationen zu nutzen, um die Entfernung zu dem Zielobjekt (50) und die Annäherungsgeschwindigkeit des Zielobjekts (50) zu bestimmen; wobei die Steuereinheit (500) konfiguriert ist, um eine Schwebungsfrequenz der Interferenz zwischen den mindestens drei Strahlen zu bestimmen und eine Differenz und einen Durchschnitt zwischen den Schwebungsfrequenzen zu bestimmen, die den mindestens ersten und zweiten unterschiedlichen Modulationen zugeordnet sind, um eine Entfernung zu dem Zielobjekt (50) und dessen Annäherungsgeschwindigkeit zu bestimmen.

10. Optisches System nach einem der Ansprüche 1 bis 9, ferner umfassend einen Scanner (170), der konfiguriert ist, um den einen oder die mehreren Signalstrahlen (IB, IB') in Richtung eines oder mehrerer Zielobjekte (50) zu richten, die ein ausgewähltes Sichtfeld abdecken.

11. Optisches System nach einem der Ansprüche 1 bis 10, ferner umfassend eine Sende-/Sammel-Strahlteileranordnung (182) und eine Linsenanordnung (1005), wobei die Sende-/Sammel-Strahlteileranordnung (182) konfiguriert ist, um den einen oder die mehreren Signalstrahlen (IB) in eine ausgewählte Anzahl von parallelen Strahlen aufzuteilen, und die Linsenanordnung positioniert ist, um die ausgewählte Anzahl von parallelen Strahlen so zu richten, dass sie eine ausgewählte Anzahl von Winkelbereichen innerhalb eines Sichtfelds abdecken, wodurch die Detektion von Entfernung und Geschwindigkeit einer Vielzahl von Orten innerhalb des Sichtfelds ermöglicht wird.

12. Optisches System nach einem der Ansprüche 1 bis 11, wobei die optische Anordnung (120) eine Sende-/Sammeloptik (130, 130', 132) umfasst, die zum Richten des einen oder der mehreren Signalstrahlen (IB) in Richtung eines Zielobjekts (50) und zum Sammeln von Licht (SB), das von dem Zielobjekt (50) reflektiert wird, konfiguriert ist, wobei die Sende-/Sammeloptik (130, 130', 132) ein oder mehrere Viertelwellenplättchen umfasst, die im Pfad des Signalstrahls (IB) und des reflektierten Lichts (SB) angeordnet und konfiguriert sind, um die Polarisation des reflektierten Lichts (SB) in Bezug auf den übertragenen Strahl (IB) zu drehen.

13. Optisches System nach einem der Ansprüche 1 bis 12, ferner umfassend mindestens einen optischen Verstärker (200), der positioniert und konfiguriert ist, um die Intensität mindestens eines der Strahlanteile, die in Richtung des einen oder der mehreren Zielobjekte (50) übertragen werden, oder des einen oder der mehreren der Referenzstrahlen zu verstärken.

14. Verfahren zum Bestimmen der Entfernung und Annäherungsgeschwindigkeit eines oder mehrerer Zielobjekte (50), wobei das Verfahren Folgendes umfasst:
Bereitstellen einer kohärenten Beleuchtung (B1) mit einem ausgewählten Wellenlängenbereich, Teilen der kohärenten Beleuchtung in mindestens drei Beleuchtungsanteile, umfassend mindestens einen Signalanteil (IB) und mindestens einen Referenzanteil, der sich entlang mindestens eines Referenzarms (LO1, LO2) ausbreitet, wobei das Bereitstellen der kohärenten Beleuchtung (B1) das Bereitstellen einer frequenzmodulierten kohärenten Beleuchtung umfasst, die mindestens erste und zweite Frequenzmodulationen aufweist, die mindestens erste und zweite unterschiedliche Frequenzmodulationen aufweisen;
Anwenden einer ausgewählten Frequenzverschiebung auf mindestens einen der mindestens drei Beleuchtungsanteile;
Richten des mindestens einen Signalanteils (IB) in Richtung eines Zielobjekts (50), und Sammeln von Signalanteilen (SB), die von dem Zielobjekt (50) zurückreflektiert werden; und
Verwenden von Ausgabedaten, die Frequenzkomponenten des kombinierten Strahls (B2) bei den mindestens ersten und zweiten Frequenzmodulationen, die mindestens erste und zweite unterschiedliche Frequenzmodulationen aufweisen, anzeigen, und Bestimmen der Entfernung und der Annäherungsgeschwindigkeit des Zielobjekts (50),
wobei das Verfahren das Kombinieren der mindestens drei Beleuchtungsanteile (SB, LO1, LO2), um einen kombinierten Strahl (B2) zu erzeugen, das Detektieren der Intensität des kombinierten Strahls (B2) und das Bestimmen der Frequenzkomponenten des kombinierten Strahls (B2) mit einer ausgewählten Abtastbandbreite umfasst.

15. Verfahren nach Anspruch 14, wobei das Bestimmen der Richtung der Frequenzverschiebung das Bestimmen der Frequenzreihenfolge zwischen ersten und zweiten Frequenzkomponenten des kombinierten Strahls, die der ausgewählten Frequenzverschiebung und der durch das Zielobjekt angewendeten Frequenzverschiebung zugeordnet sind, gemäß der relativen Amplitude zwischen ihnen umfasst.

## Revendications

1. Système optique (100) comprenant une unité de source de lumière (110), un agencement optique (120), et une unité de détection (140) ;
l'unité de source de lumière (110) est configurée pour fournir une émission optique (B1) d'une plage de longueurs d'onde sélectionnée dirigée pour se propager dans l'agencement optique (120) ;
l'agencement optique (120) comprend un agencement de séparation de faisceau configuré pour séparer une émission optique reçue à partir de l'unité de source de lumière (110) en au moins trois faisceaux comprenant au moins deux faisceaux de référence (LO1, LO2) et au moins un faisceau de signal (IB) ou au moins deux faisceaux de signaux (IB) et au moins un faisceau de référence (LO1, LO2) ;
l'agencement optique (120) est en outre configuré pour diriger l'un ou plusieurs faisceaux de signaux (IB) vers un objet cible (50), collecter la lumière réfléchie à partir dudit objet cible (50) formant un ou plusieurs faisceaux réfléchis (SB) ;
dans lequel ledit agencement optique (120) comprend en outre un décaleur de fréquence (150) configuré pour décaler la fréquence de l'un desdits au moins deux faisceaux de référence (LO1, LO2) ou de l'un desdits au moins deux faisceaux de signaux (IB) par un décalage de fréquence sélectionné ;
dans lequel ladite unité de source de lumière (110) est configurée pour fournir une émission optique modulée en fréquence comprenant au moins des première *(fᵤₚ)* et seconde *(f_{down})* modulations différentes ; et
dans lequel l'agencement optique (120) comprend en outre un combineur de faisceaux (124) configuré pour recevoir la partie réfléchie collectée (SB) et des faisceaux de référence (LO1, LO2) et pour combiner les faisceaux reçus en un faisceau d'interférence combiné (B2), ladite unité de détection (140) est configurée pour la détection du faisceau d'interférence combiné (B2) et pour générer des données de sortie indicatives de composants de fréquence dudit faisceau d'interférence combiné (B2), lesdites données indicatives de composants de fréquence étant indicatives d'un décalage de fréquence généré par ledit objet cible (50).

2. Système optique selon la revendication 1, dans lequel ledit agencement optique (120) est configuré pour affecter l'intensité desdits au moins deux faisceaux de référence (LO1, LO2) ou au moins deux faisceaux de signaux (IB) pour générer une relation d'intensité prédéterminée entre lesdits au moins deux faisceaux de référence (LO1, LO2) ou au moins deux faisceaux de signaux (IB).

3. Système optique selon la revendication 2, dans lequel ledit agencement optique (120) comprend au moins un atténuateur de puissance (160) configuré pour réduire l'intensité lumineuse dans l'un desdits au moins deux faisceaux de référence (LO1, LO2) ou desdits au moins deux faisceaux de signaux (IB), permettant de ce fait la différenciation entre lesdits au moins deux faisceaux.

4. Système optique selon la revendication 2 ou 3, dans lequel ledit agencement optique (120) comprend un séparateur de faisceau asymétrique (160) configuré pour la séparation de ladite émission optique reçue pour former lesdits au moins deux faisceaux de référence (LO1, LO2) ou lesdits au moins deux faisceaux de signaux (IB) ayant une relation d'intensité prédéterminée entre eux.

5. Système optique selon l'une quelconque des revendications 1 à 4, dans lequel ledit décaleur de fréquence (150) comprend un ou plusieurs parmi un modulateur de phase, un modulateur de fréquence, un modulateur IQ, un modulateur électro-optique, un modulateur acousto-optique, ou une ligne à retard étendant le trajet optique dudit un desdits au moins deux faisceaux de référence (LO1, LO2) ou d'un desdits au moins deux faisceaux de signaux (IB) par une longueur sélectionnée, générant de ce fait ledit décalage de fréquence sélectionné.

6. Système optique selon l'une quelconque des revendications 1 à 5, dans lequel ladite unité de source de lumière (110) comprend au moins une unité laser (112) et un ou plusieurs modulateurs de fréquence respectifs (115) pouvant fonctionner pour fournir une émission optique modulée en fréquence comprenant au moins des première et seconde modulations différentes.

7. Système optique selon l'une quelconque des revendications 1 à 6, dans lequel ladite émission optique modulée en fréquence (B1) est modulée périodiquement.

8. Système optique selon l'une quelconque des revendications 1 à 7, dans lequel lesdites au moins première et seconde modulations différentes comprennent au moins l'un parmi : (i) au moins une modulation chirp ascendante et une modulation chirp descendante, ou (ii) au moins un premier et un second signal chirp ayant des premier et second taux de chirp différents respectifs.

9. Système optique selon l'une quelconque des revendications 1 à 8, comprenant en outre une unité de commande (500) configurée pour la réception de données de détection à partir de l'unité de détection (140) et l'utilisation de la détection d'interférence desdits au moins trois faisceaux par rapport auxdites au moins première et seconde modulations différentes pour déterminer la distance jusqu'audit objet cible (50) et la vitesse de rapprochement dudit objet cible (50) ; ladite unité de commande (500) est configurée pour déterminer la fréquence de battement d'interférence entre lesdits au moins trois faisceaux, et pour déterminer la différence et la moyenne entre lesdites fréquences de battement associées auxdites au moins première et seconde modulations différentes pour déterminer la distance jusqu'audit objet cible (50) et la vitesse de rapprochement de celui-ci.

10. Système optique selon l'une quelconque des revendications 1 à 9, comprenant en outre un dispositif de balayage (170) configuré pour diriger lesdits un ou plusieurs faisceaux de signaux (IB, IB') vers un ou plusieurs objets cibles (50) couvrant un champ de vision sélectionné.

11. Système optique selon l'une quelconque des revendications 1 à 10, comprenant en outre un agencement de séparation de faisceau d'émission/collecte (182) et un agencement de lentilles (1005), ledit agencement de séparation de faisceau d'émission/collecte (182) est configuré pour séparer lesdits un ou plusieurs faisceaux de signaux (IB) en un nombre sélectionné de faisceaux parallèles, et ledit agencement de lentilles est positionné pour diriger ledit nombre sélectionné de faisceaux parallèles afin de couvrir un nombre sélectionné de régions angulaires dans un champ de vision, permettant de ce fait la détection de la distance et de la vitesse d'une pluralité d'emplacements dans ledit champ de vision.

12. Système optique selon l'une quelconque des revendications 1 à 11, dans lequel ledit agencement optique (120) comprend une optique d'émission/collecte (130, 130', 132) configurée pour la direction desdits un ou plusieurs faisceaux de signaux (IB) vers un objet cible (50) et pour la collecte de la lumière (SB) réfléchie à partir dudit objet cible (50), ladite optique d'émission/collecte (130, 130', 132) comprend une ou plusieurs lames quart d'onde situées dans le trajet du faisceau de signaux (IB) et de la lumière réfléchie (SB) et configurées pour faire tourner la polarisation de la lumière réfléchie (SB) par rapport au faisceau émis (IB).

13. Système optique selon l'une quelconque des revendications 1 à 12, comprenant en outre au moins un amplificateur optique (200) positionné et configuré pour amplifier l'intensité d'au moins l'une des parties de faisceau émises vers lesdits un ou plusieurs objets cibles (50) ou de l'un ou plusieurs des faisceaux de référence.

14. Procédé de détermination de la distance et de la vitesse de rapprochement d'un ou plusieurs objets cibles (50), le procédé comprenant :
la fourniture d'un éclairage cohérent (B1) ayant une plage de longueurs d'onde sélectionnée, la séparation dudit éclairage cohérent en au moins trois parties d'éclairage comprenant au moins une partie de signal (IB) et au moins une partie de référence se propageant le long d'au moins un bras de référence (LO1, LO2), ladite fourniture d'un éclairage cohérent (B1) comprend la fourniture d'un éclairage cohérent modulé en fréquence ayant au moins des première et seconde modulations de fréquence ayant au moins des première et seconde modulations de fréquence différentes ;
l'application d'un décalage de fréquence sélectionné à au moins l'une desdites au moins trois parties d'éclairage ;
la direction de l'au moins une partie de signal (IB) vers un objet cible (50), et la collecte de parties de signal (SB) réfléchies à partir dudit objet cible (50) ; et
l'utilisation de données de sortie indicatives de composants de fréquence dudit faisceau combiné (B2) auxdites au moins première et seconde modulations de fréquence ayant au moins des première et seconde modulations de fréquence différentes et la détermination de la distance et de la vitesse de rapprochement dudit objet cible (50)
dans lequel le procédé comprenant la combinaison desdites au moins trois parties d'éclairage (SB, LO1, LO2) pour générer un faisceau combiné (B2), la détection de l'intensité du faisceau combiné (B2) et la détermination des composants de fréquence dudit faisceau combiné (B2) avec une bande passante d'échantillonnage sélectionnée.

15. Procédé selon la revendication 14, dans lequel la détermination de la direction du décalage de fréquence comprend la détermination de l'ordre des fréquences entre des premier et second composants de fréquence du faisceau combiné associés audit décalage de fréquence sélectionné et au décalage de fréquence appliqué par ledit objet cible conformément à l'amplitude relative entre elles.
